(19) **Europäisches Patentamt**
**European Patent Office**
**Office européen des brevets**

(11) **EP 2 502 698 B1**

(12) **EUROPEAN PATENT SPECIFICATION**

(45) Date of publication and mention
of the grant of the patent:
**12.08.2020 Bulletin 2020/33**

(51) Int Cl.:
***B23K 20/12*** *(2006.01)*

(21) Application number: **09851448.2**

(86) International application number:
**PCT/JP2009/069583**

(22) Date of filing: **18.11.2009**

(87) International publication number:
**WO 2011/061826 (26.05.2011 Gazette 2011/21)**

(54) **TWO-SURFACE FRICTION STIR WELDING METHOD AND DEVICE, TOOL SET FOR TWO-SURFACE FRICTION STIR**

ZWEIFLÄCHEN-RÜHRREIBSCHWEISSVERFAHREN UND VORRICHTUNG, WERKZEUGSET FÜR ZWEIFLÄCHEN-RÜHRREIBSCHWEISSEN

PROCÉDÉ ET DISPOSITIF DE SOUDAGE PAR FRICTION-MALAXAGE À DEUX SURFACES ET OUTILLAGE DE FRICTION-MALAXAGE À DEUX SURFACES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**26.09.2012 Bulletin 2012/39**

(73) Proprietor: **Primetals Technologies Japan, Ltd.**
**Hiroshima 7338553 (JP)**

(72) Inventors:
• **KAGA Shinichi**
**Tokyo 108-0014 (JP)**
• **ONOSE Mitsuru**
**Tokyo 108-0014 (JP)**
• **TOMINAGA Noriaki**
**Hiroshima-shi**
**Hiroshima 733-8553 (JP)**
• **SAITO Takehiko**
**Hiroshima-shi**
**Hiroshima 733-8553 (JP)**

• **YOSHIMURA Yasutsugu**
**Tokyo 108-0014 (JP)**
• **HIRANO Satoshi**
**Hitachi-shi**
**Ibaraki 319-1292 (JP)**
• **PARK Seung Hwan**
**Hitachi-shi**
**Ibaraki 319-1292 (JP)**

(74) Representative: **Beetz & Partner mbB**
**Patentanwälte**
**Robert-Koch-Str. 1**
**80538 München (DE)**

(56) References cited:
| | |
|---|---|
| EP-A1- 1 386 688 | EP-A2- 1 149 656 |
| JP-A- 11 048 968 | JP-A- 11 090 654 |
| JP-A- 11 267 859 | JP-A- 11 320 127 |
| JP-A- 2000 334 577 | JP-A- 2000 334 577 |
| JP-A- 2002 331 370 | JP-A- 2003 211 326 |
| JP-A- 2005 066 643 | JP-A- 2008 036 648 |
| JP-A- 2009 241 771 | US-A1- 2006 231 594 |

**EP 2 502 698 B1**

**Description**

Technical Field

The present invention relates to a method and apparatus for frictionally stirring a joint portion of metal materials from both surfaces of the joint portion to join the metal materials and a tool set for the both-side friction stir welding. A method as described in the preamble portion of patent claim 1 and an apparatus as described in the preamble portion of claim 6 have been known from JP 2000 334577 A.

Background Art

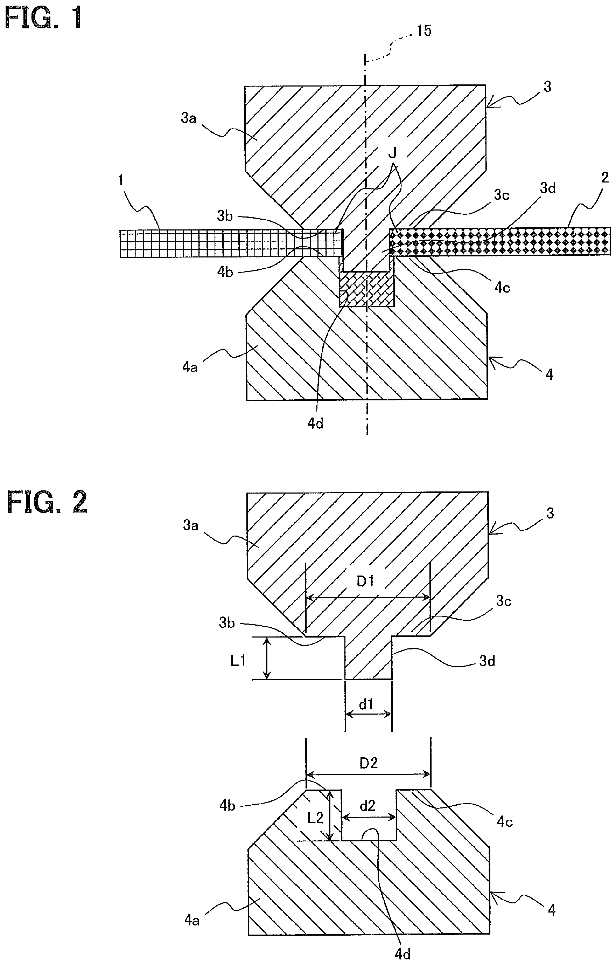

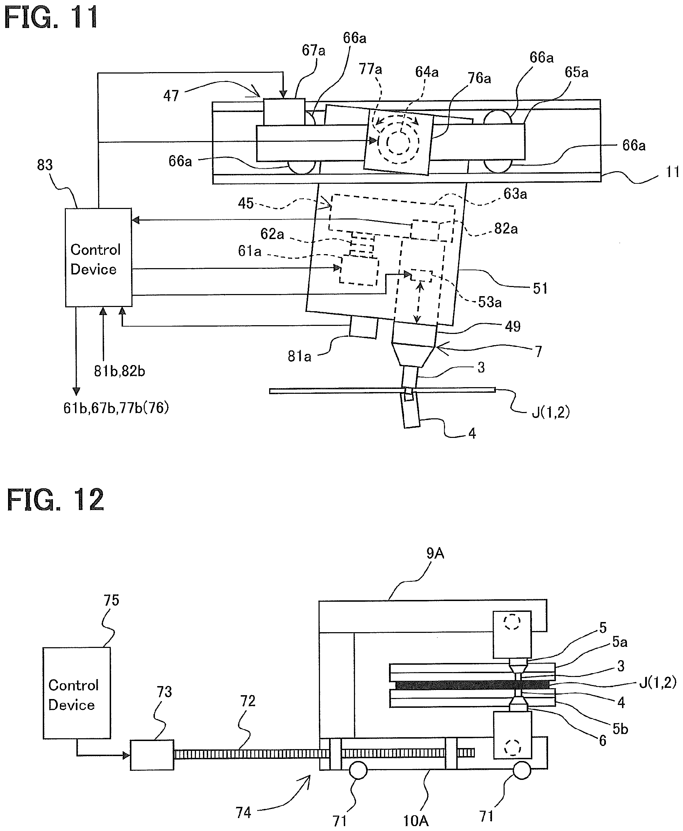

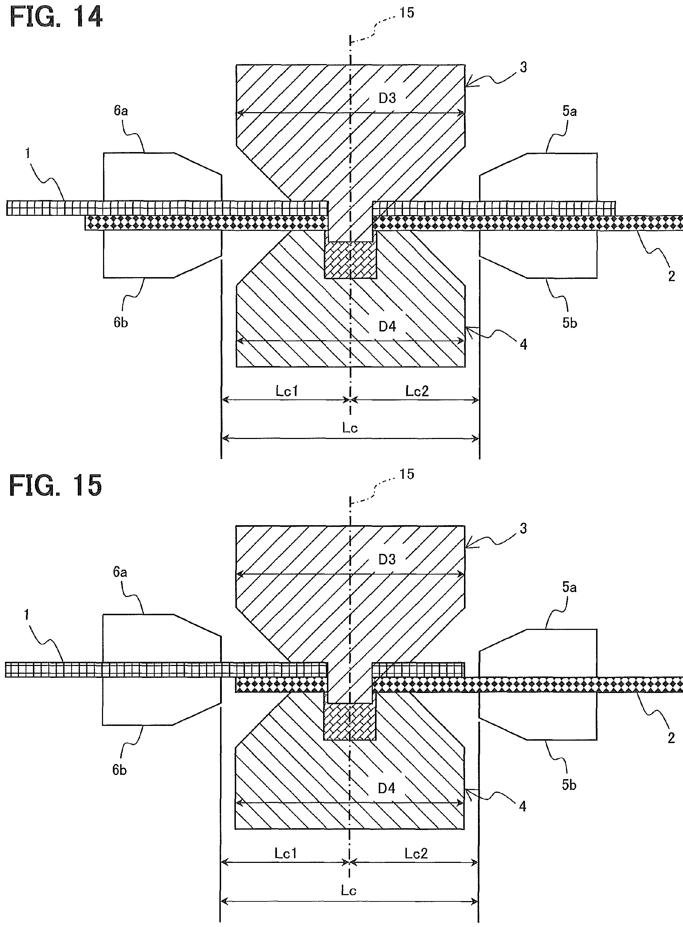

Friction stir welding is known as a technique that the surface of a rotary tool shoulder is brought into contact with surfaces of the materials to be joined while the rotary tool is rotated, and the materials are frictionally stirred by utilizing the frictional heat between the shoulder surface and the materials surfaces, so that the materials are welded and joined under a solid-phase state below the melting points. This welding technique is already commercialized primarily for joining aluminum alloys in a variety of industrial fields.
Conventional friction stir welding techniques are mainly classified into one-side friction stir welding and both-side friction stir welding.
The one-side friction stir welding is the most general method and is illustrated, for example, in Fig. 12 of JP 2712838 A. This uses a rotary tool including a probe formed at a tip end of the tool body and having a diameter smaller than that of the tip end of the tool body and a shoulder formed around a portion of the tip end of the tool body at which the probe is formed, and the rotary tool is inserted from one surface side of a joint portion (e.g., a butting portion) of two metal plates to be joined, and the tool is rotated to frictionally stir the joint portion by utilizing the resulting frictional heat thereby to join the plates.
The both-side friction stir welding includes two types.
The first type of the both-side friction stir welding uses a single rotary tool, which is generally called a bobbin tool, frictionally stirs front and back surfaces of a joint portion (e.g., butting portion) of two metal plates and welds the joint portion, and this type is illustrated in Fig. 2a of JP 2712838 A, for example.
The second type of the both-side friction stir welding uses two rotary tools arranged in opposed relationship in the front and back surface sides of a joint portion (e.g., butting portion) of metal plates in such a manner as not to impart clearance between the tip ends of probes, and in this state, the friction stir welding is carried out to join the metal plates, and this type is illustrated in Fig. 14a of JP 2712838 A, for example.
JP 2000 334577 A discloses a both-side friction stir welding method in which first and second rotary tools are arranged in opposed relationship in the front and back surface sides of a joint portion of two metal plates to be joined, and the joint portion is frictionally stirred by the rotary tools to perform friction stir welding and join the two metal plates, wherein: one of the first and second rotary tools includes a tool body having a shoulder portion formed at a tip end portion thereof and at least one protruding portion formed to protrude from the tip end portion of the tool body, the other of the first and second rotary tools includes a tool body having a shoulder portion formed at the tip end portion thereof and at least one recessed portion formed at the tip end portion of the other tool body.
EP 1 386 688 A1 discloses a both-side friction stir welding apparatus,
in which first and second rotary tools are arranged in opposed relationship in the front and back surface sides of a joint portion of two metal plates to be joined, and the joint portion is frictionally stirred by the rotary tools to perform friction stir welding and join the two metal plates, the apparatus comprising: tool rotation devices having the first and second rotary tools attached thereto in opposed relationship in the front and back surface sides of the joint portion of the two metal plates, for rotating the first and second rotary tools; tool pressing devices for moving the first and second rotary tools attached to the tool rotation devices in a direction to approach to each other to press the first and second rotary tools against the front and back surfaces of the joint portion of the metal plates; and moving devices for moving the first and second rotary tools attached to the tool rotation devices along the joint portion; wherein: the first rotary tool includes a tool body having a shoulder portion formed at a tip end portion thereof and at least one protruding portion formed to protrude from the tip end portion of the tool body, the second rotary tool includes a tool body having a shoulder portion formed at a tip end portion thereof and at least one recessed portion formed at the tip end portion of the tool body; as well as a welding tool using the same.

Summary of the Invention

Problem to be Solved by the Invention

The one-side friction stir welding and the both-side friction stir welding described in JP 2712838 A have the following problems.

The first is a problem with economy and service life of tools.

The length of the probe of the rotary tool used in the one-side friction stir welding described in JP 2712838 A is equal to the thickness of the metal plates.

The length of the probe of the bobbin tool used in the both-side friction stir welding described in JP 2712838 A is equal to the thickness of the metal plates as is the case with the one-side friction stir welding. The length of probe insertion of two rotary tools arranged in opposed relationship in the front and back surfaces are one half the thickness of the metal plates.

Accordingly, when the thickness of the metal plate differs, a need arises to correspondingly change the probe length as well, so that a number of rotary tools each having different probe length have to be prepared for metal plates of different thicknesses, thereby worsening economy.

Further, in the bobbin tool, the friction stir by the shoulder located opposite from the driving side is performed by a power transmitted through the probe. Therefore, in order to drive the shoulder having a diameter larger than that of the probe, it is necessary to set the section modulus of the probe two or more times compared with that of the tool of a one-side friction stir welding apparatus. Thus, with large diameter of the probe, the diameter of the shoulder needs to be large as well, so that a friction stir range is increased and this increases consumption energy and the size of the apparatus, thereby worsening economy.

The friction stir welding is placed in practical use in the field of nonferrous alloys, such as aluminum, that are materials of relatively low melting points. In general, friction stir welding requires increasing temperature of material to nearly 80% of the melting point with heat due to friction stirring. Consequently, in the welding of materials whose melting points exceed 1,000°C, friction stirring input energy per unit welding length increases and deformation resistance values also increase. Rotary tools therefore require high heat resistant strength and high fracture toughness, so that expensive materials such as polycrystalline diamonds have to be used.

Additionally, even if such expensive materials are used for the tools, service life of tools is reduced due to thermal impacts, tool wear, and a bending stress upon probes, and this hinders friction stir welding from being widely used for materials of high melting point exceeding 1,000°C.

The second is a problem with a joint defect.

In the bobbin tool illustrated in Fig. 2a of JP 2712838 A, since the shoulders that are to be placed in the front and back surface sides are united with the probe, a distance between the surfaces of the shoulders is fixed due to the tool structure.

Further, in the both-side friction stir welding illustrated in Fig. 14a of JP 2712838 A, since frictional stir welding is performed by two rotary tools arranged in opposed relationship in the front and back surfaces in such a manner as not to impart clearance between the tip ends of probes, a distance between the surfaces of the shoulders is fixed at a joint setting position depending on the thickness of the metal plates.

In the both-side friction stir welding performed under the state that the distance between the surfaces of the shoulders is fixed, when the thickness of the metal plates is slightly changed, the pressure exerted upon the contact surfaces between the shoulders and the metal plates is changed. The change in the surface pressure varies the amount of frictional heat and deteriorates the quality of the joint portion.

Further, in the bobbin tool illustrated in Fig. 2a of JP 2712838 A, since the axes vertical to the shoulder surfaces of the rotary tools arranged in opposed relationship in the front and back surface sides are the same, the axis of the rotary tool cannot be inclined, so that it is difficult to give desired surface pressure necessary for the stirring. When the desired surface pressure necessary for the stirring cannot be given, flowablity of the joint portion is reduced, so that joint defect may occur.

The third is a problem with rupture of the metal plates due to the frictional force.

In the both-side friction stir welding, a shearing force due to the frictional forces is generated in portions sandwiched by the shoulder surfaces in the front and back surface sides of the metal plates, and the metal plates ruptures when the shearing forces exceeds an allowable shearing force of the material of the metal plates.

The allowable shearing force of the material (metal plates) subject to the friction stir welding varies depending on the thickness of the plates, and the allowable shearing force decreases with decreases in plate thickness.

According to experiments conducted by the present inventors, it has been confirmed that the metal plates are liable to rupture when the thickness of the metal plates is below 3 mm.

A first object of the present invention is to provide both-side friction stir welding method and apparatus and a tool set for both-side friction stir welding, which are superior in economy and are capable of improving the strength of a joint portion in the both-side friction stir welding.

A second object of the present invention is to provide both-side friction stir welding method and apparatus and a tool set for both-side friction stir welding, which are further capable of prolong the service life of rotary tools in the both-side friction stir welding.

Means for Solving the Problems

To solve the aforementioned problems, according to a first aspect of the present invention, there is provided a both-side friction stir welding method in which first and second rotary tools are arranged in opposed relationship in the front and back surface sides of a joint portion of two metal plates to be joined, and the joint portion is frictionally stirred by the rotary tools to perform friction stir welding and join the two metal plates, wherein: one of the first and second rotary tools includes a tool body having a shoulder portion formed at a tip end portion thereof and at least one protruding portion formed to protrude from the tip end portion of the tool body, the other of the first and second rotary tools includes a tool body having a shoulder portion formed at a tip end portion thereof and at least one recessed portion formed at the tip end portion of the other tool body to receive a tip end of the protruding portion therein when the two metal plates are to be welded; the method comprising the steps of: arranging the first and second rotary tools in opposed relationship in the front and back surface sides of the joint portion of the two metal plates; rotating the first and second rotary tools; and moving the first and second rotary tools in a direction to approach to each other so as to insert the tip end of the protruding portion of the first rotary tool into the recessed portion of the second rotary tool while pressing shoulder surfaces of the shoulder portions of the first and second rotary tools against the front and back surfaces of the joint portion; and moving, under the state that the tip end of the protruding portion of the first rotary tool is inserted into the recessed portion of the second rotary tool and the shoulder surfaces of the shoulder portions of the first and second rotary tools are pressed against the front and back surfaces of the joint portion, the first and second rotary tools along the joint portion thereby to frictionally stir the joint portion in the entire region in the thickness direction of the joint portion.

To solve the aforementioned problems, according to a second aspect of the present invention, in the above welding method, materials of the first and second rotary tools are cemented carbide alloy of sintered tungsten carbide or a tungsten alloy, and the two metal plates welded together by the first and second rotary tools are made of a material having a melting point of 1,000°C or more.

To solve the aforementioned problems, according to a third aspect of the present invention, in the above welding method, the axes of the first and second rotary tools are inclined such that the tip end portions of the first and second rotary tolls move ahead in a direction of movement of the first and second rotary tools relative to the joint portion (J).

To solve the aforementioned problems, according to a fourth aspect of the present invention, in the above welding method, the first and second rotary tools arranged in opposed relationship are rotated in opposite directions in the front and back surface sides of the joint portion of the two metal plates.

To solve the aforementioned problems, according to a fifth aspect of the present invention, in the above welding method, at least one of the first and second rotary tools is moved to a planned insertion depth by position control moved in a thickness direction of the metal plates before start of friction stir welding; then, the rotary tool is moved by position control in a welding progress direction from an edge surface of the joint portion of the two metal plates with the insertion depth of the rotary tool being maintained to start the friction stir welding; after the start of the friction stir welding, the position control is switched to constant load control to control the insertion position of the rotary tool such that a load applied to the rotary tool is maintained at a predetermined value; and then, before the rotary tool reaches a welding terminating end of the joint portion at which the friction stir welding terminates, the constant load control is switched to position control to maintain the insertion position of the rotary tool at that time and the rotary tool passes through the welding terminating end of the joint portion.

To solve the aforementioned problems, according to a sixth aspect of the present invention, there is provided a both-side friction stir welding apparatus in which first and second rotary tools are arranged in opposed relationship in the front and back surface sides of a joint portion of two metal plates to be joined, and the joint portion is frictionally stirred by the rotary tools to perform friction stir welding and join the two metal plates, the apparatus comprising: tool rotation devices having the first and second rotary tools attached thereto in opposed relationship in the front and back surface sides of the joint portion of the two metal plates, for rotating the first and second rotary tools; tool pressing devices for moving the first and second rotary tools attached to the tool rotation devices in a direction to approach to each other to press the first and second rotary tools against the front and back surfaces of the joint portion of the metal plates; and moving devices for moving the first and second rotary tools attached to the tool rotation devices along the joint portion; wherein: the first rotary tool includes a tool body having a shoulder portion formed at a tip end portion thereof and at least one protruding portion formed to protrude from the tip end portion of the tool body, the second rotary tool includes a tool body having a shoulder portion formed at a tip end portion thereof and at least one recessed portion formed at the tip end portion of the tool body for receiving a tip end of the protruding portion therein when the two metal plates are to be welded, a control device is configured to control the tool pressing devices to insert the tip end of the protruding portion of the first rotary tool into the recessed portion of the second rotary tool and press shoulder surfaces of the shoulder portions of the first and second rotary tools against the front and back surfaces of the joint portion when the tool pressing devices move the first and second rotary tools attached to the tool rotation devices in the direction to approach to each other, and the control device is configured to control the moving devices to move the first and second rotary tools along the joint portion under the state that the tip end of the protruding portion of the first rotary tool is inserted into the recessed portion of the second rotary tool and the shoulder surfaces of the shoulder portions of the first and second rotary tools are pressed against the front and back surfaces of the joint portion thereby to frictionally stir the joint portion in the entire region in the thickness direction of the joint portion.

To solve the aforementioned problems, according to a seventh aspect of the present invention, the above both-side friction stir welding apparatus further comprises: inclination supporting devices for supporting the first and second rotary tools to incline the axes of the first and second rotary tools such that the tip end portions of the first and second rotary tolls move ahead in a direction of movement of the first and second rotary tools relative to the joint portion.

To solve the aforementioned problems, according to an eighth aspect of the present invention, in the above both-side friction stir welding apparatus, the tool rotation devices is configured to rotate the first and second rotary tools in opposite directions in the front and back surface sides of the joint portion.

To solve the aforementioned problems, according to a ninth aspect of the present invention, the control device is configured to control the tool pressing devices and the moving devices such that: at least one of the first and second rotary tools attached to the tool rotation devices is moved to a planned insertion depth by position control in the direction of thickness of the metal plates before start of friction stir welding; then, the rotary tool is moved by position control in a welding progress direction from an edge surface of the joint portion of the two metal plates with the insertion depth of the rotary tool being maintained to start the friction stir welding; after the start of the friction stir welding, the position control is switched to constant load control to control the insertion position of the rotary tool such that a load applied to the rotary tool is maintained at a predetermined value; and then, before the rotary tool reaches a welding terminating end of the joint portion at which the friction stir welding terminates, the constant load control is switched to position control to maintain the insertion position of the rotary tool at that time and the rotary tool passes through the welding terminating end of the joint portion.

According to the present invention, the following effects can be obtained.

In the first and sixth aspects of the present invention, since the first and second rotary tools arranged in opposed relationship in that front and back surface sides of the joint portion are separated from each other, the amount of insertion of the protruding portion of the first rotary tool in the recessed portion of the second rotary tool (a distance between the first and second rotary tools) can be freely adjusted within a range in which the insertion mount is not zero. Thus, even when the metal plates include those different in thickness, the protruding portion of the first rotary tool can be inserted into the recessed portion of the second rotary tool to match with the thicknesses of the metal plates, whereby the metal plates having thicknesses in a range of the length of the protruding portion can be subjected to friction stir welding over the entire range of the joint portion from both surfaces of the metal plates. Thus, since a number of rotary tools each having different probe length have not to be prepared for metal plates of different thicknesses, the running cost is suppressed and thus the economy can be improved.

In addition, the first and second rotary tools are separated and are driven independently from each other. Thus, differently from a bobbin tool, the friction stir by the shoulder portion of the rotary tool in the back surface side is performed without a power transmitted through a probe, it is not necessary to set the diameter of the probe (protruding portion) at least two or more times compared with that of the tool of a one-side friction stir welding apparatus as in case of the bobbin tool. It is, therefore, possible to prevent the diameter of the shoulder portion from being increased due to an increase in the diameter of the probe, and thus the size of the apparatus does not need to be increased, and the economy can be improved also at this point.

In addition, since the first and second rotary tools frictionally stir the joint portion of the metal plates in the entire region in the thickness direction of the joint portion, the strength of the joint portion can be improved.

Furthermore, since the first and second rotary tools perform the friction stir welding from both sides of the front and back surfaces of the joint portion, it is possible to prevent a thermal loss that is caused by a backing plate in one-side friction stir welding. Thus, a softened region of the joint portion is increased, and it is possible to reduce a thermal load applied to one rotary tool to 1/2 or less. In addition, since the first and second rotary tools are separated and a distance between the first and second rotary tools (distance between the tip end portions of the tools in the direction of the thicknesses of the metal plates) is adjustable, the load control can be used for pressing of at least one of the rotary tools against the joint portion as in the fifth and ninth aspects of the present invention. By using the load control in such a way, change in the pressure exerted upon the contact surfaces between the shoulder surfaces and the surfaces of the joint portion of the metal plates due to slight change in the thickness of the metal plates can be prevented to occur, and variation in a thermal load can be reduced. Thus, it is not necessary to use an expensive material such as polycrystalline diamond as materials of the rotary tools, and the first and second rotary tools can be made of cemented carbide alloy of sintered tungsten carbide or a tungsten alloy as in the second aspect of the present invention. As a result, it is possible to provide the rotary tools of long service life and superior in economy in the frictionally stir welding of metal plates having a melting point of 1,000°C or more.

In addition, since the load control can be used, by adjusting the amount of insertion of the protruding portion of the first rotary tool into the recessed portion of the second rotary tool depending on the thickness of the metal plates (thickness of the joint portion), the friction stir welding can be performed from both sides without fixing the distance between the upper and lower shoulder surfaces. Thus, change in the pressure exerted upon the contact surfaces between the shoulder surfaces and the surfaces of the joint portion of the metal plates due to slight change in the thickness of the metal plates can be prevented to occur, and variation in a thermal load can be reduced, so that a reduction in the quality of the joint portion J (joint defect) can be prevented and it is possible to join the metal plates with high reliability.

In addition, since the first and second rotary tools are separated from each other, the axes of the rotary tools can be inclined such that the tip end portions of the first and second rotary tolls move ahead in the welding progress direction as in the third and seventh aspects of the present invention. Thus, since the pressing force against the metal plates can be increased, the flowability of the joint portion by the friction stir welding can be improved and thus it is possible to suppress joint defect and join the metal plates with high reliability.

In addition, since the first and second rotary tools are separated from each other, the first and second rotary tools can be rotated in opposite directions in the front and back surface sides of the joint portion as in the fourth and eighth aspects of the present invention. Thus, a shearing force due to stirring from the front surface side and a shearing force due to stirring from the back surface side are canceled out within the interior of the joint portion, and this prevents the materials from rupturing and it is possible to join the metal plates with high reliability. This effect is high especially when the diameters of the shoulder surfaces of the first and second rotary tools are equal to each other.

In addition, the materials softened by friction stir flows into the recessed portion of the second rotary tool to fill a gap. Thus, since the protruding portion of the first rotary tool inserted in the recessed portion of the second rotary tool receives inner pressure through the softened materials filled in the gap, a vibration damping force acts and the performance of vibration damping for the first and second rotary tools in the radial direction is improved. As a result, chattering is suppressed and it is possible to realize a uniform friction stir, and thus also in this point, it is possible to suppress joint defect and join the metal plates with high reliability.

Further, by forming the second rotary tool with at least one ring-shaped protruding portion to protrude from the tip end portion of the tool body and forming the recessed portion in the inner side of the ring-shaped protruding portion, when the friction stir is performed, not only the protruding portion of the first rotary tool but also the ring-shaped protruding portion of the second rotary tool are inserted into the joint portion in the direction of the thickness thereof whereby the friction stir is performed with the two protruding portions. Thus, since the length of the protruding portion of the first rotary tool can be reduced, a rotating bending moment that acts on the protruding portion upon friction stir welding is reduced, and then even if the thicknesses of the metal plates are increased, the friction stir welding can be performed without damaging the protruding portion, and thus the service life of the rotary tools can be improved.

Brief Description of the Drawings

[Fig. 1]
Fig. 1 is an enlarged cross sectional view of tip end portions of a tool set for both-side friction stir welding according to an embodiment of the present invention and shows the state in which the tool set is used when welding is performed.
[Fig. 2]
Fig. 2 is an enlarged cross sectional view of the tip end portions of the tool set for both-side friction stir welding according to the embodiment of the present invention and shows dimensional relationships of parts.
[Fig. 3]

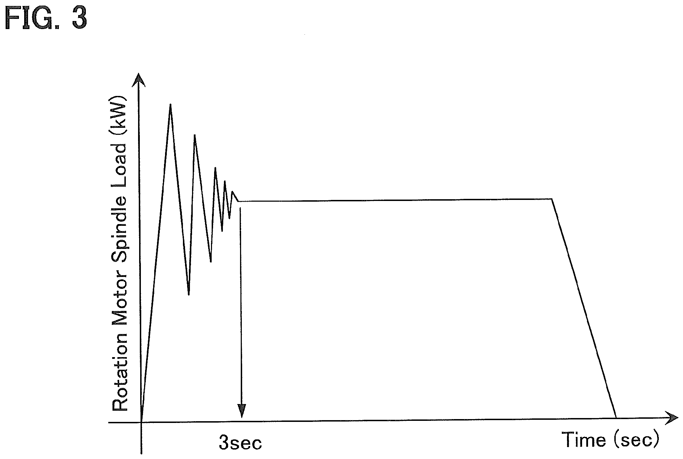

Fig. 3 is a time chart showing a joint distance (time after the start of the welding) between first and second rotary tools and a change in a load applied to a spindle rotation motor.
[Fig. 4]

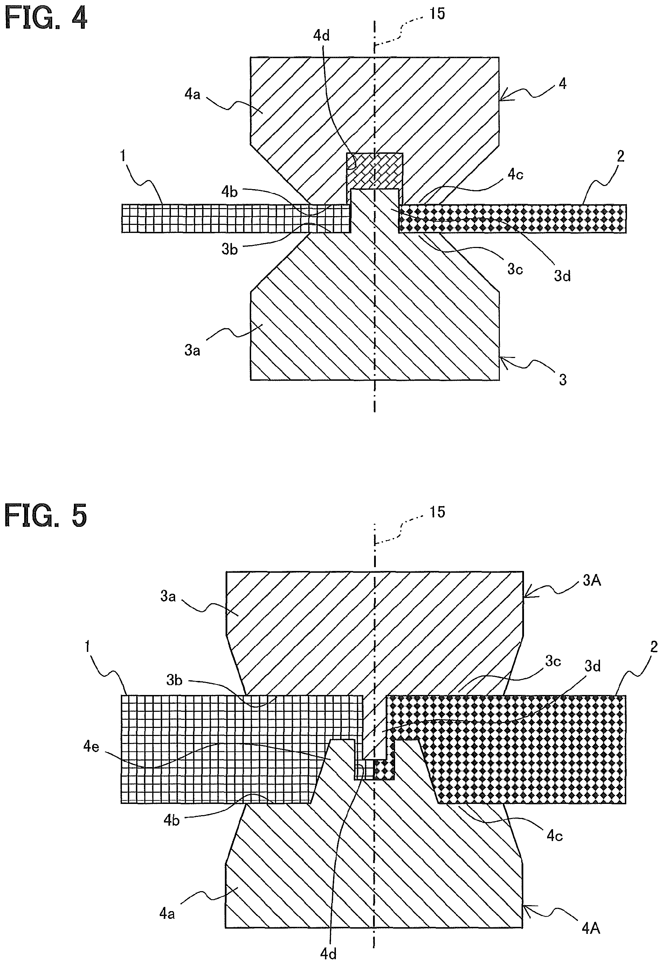

Fig. 4 is a diagram showing the state in which the tool set is used when the welding is performed in the case where the positions of the first and second rotary tools are reversed with respect to front and back surfaces of a joint portion for the rotary tools.
[Fig. 5]
Fig. 5 is an enlarged cross sectional view of tip end portions of a tool set for both-side friction stir welding according to another embodiment of the present invention and shows the state in which the tool set is used when the welding is performed.
[Fig. 6]

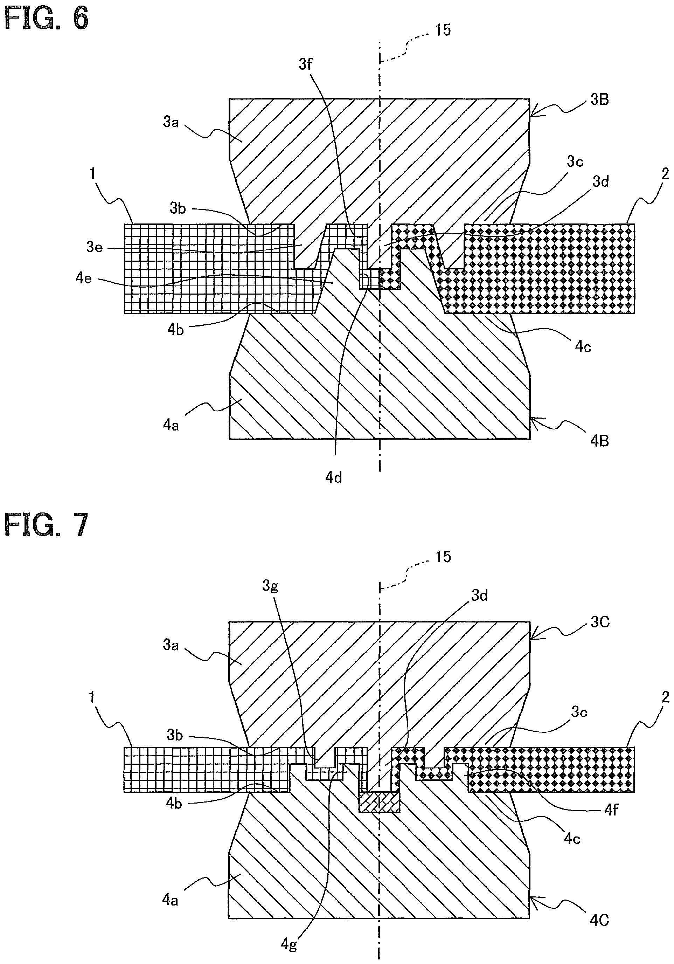

Fig. 6 is an enlarged cross sectional view of tip end portions of a tool set for both-side friction stir welding according to still another embodiment of the present invention and shows the state in which the tool set is used when the welding is performed.
[Fig. 7]
Fig. 7 is an enlarged cross sectional view of tip end portions of a tool set for both-side friction stir welding according to still another embodiment of the present invention and shows the state in which the tool set is used when the welding is performed.

[Fig. 8]

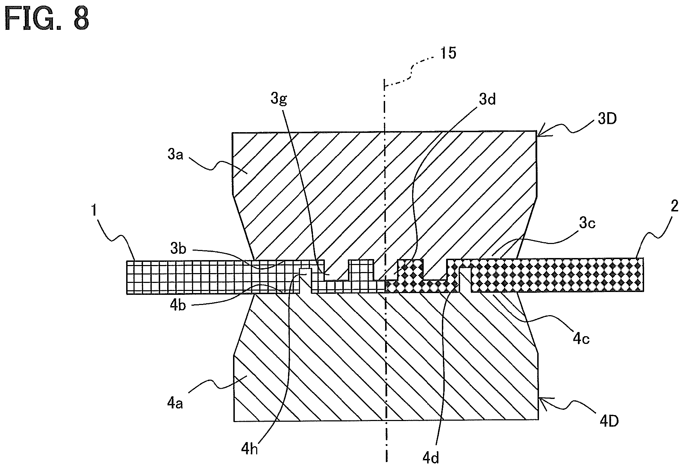

Fig. 8 is an enlarged cross sectional view of tip end portions of a tool set for both-side friction stir welding according to still another embodiment of the present invention and shows the state in which the tool set is used when the welding is performed.

[Fig. 9]

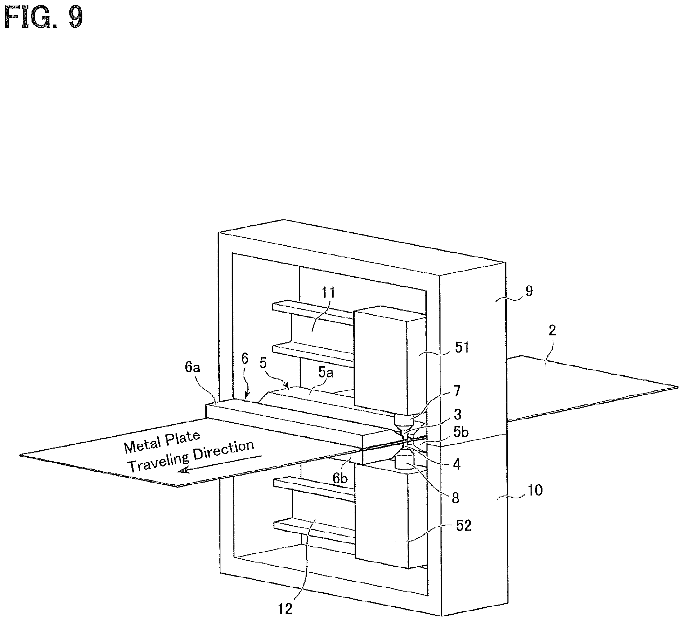

Fig. 9 is a perspective view of the both-side friction stir welding apparatus according to the embodiment of the present invention with a part of the both-side friction stir welding apparatus removed.

[Fig. 10]

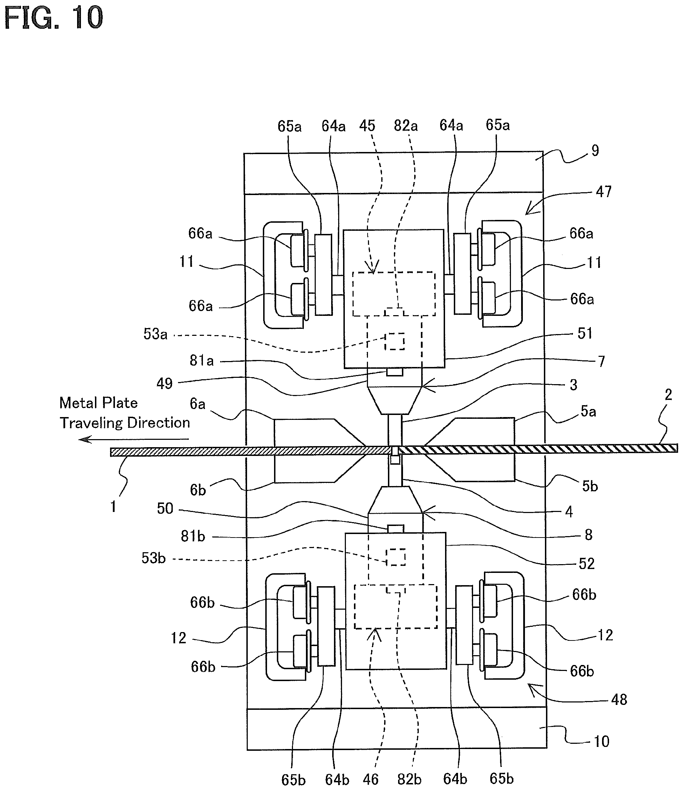

Fig. 10 is a schematic front view of main part of the both-side friction stir welding apparatus shown in Fig. 9.

[Fig. 11]

Fig. 11 is a view showing an upper half of the both-side friction stir welding apparatus shown in Fig. 9 together with a control system.

[Fig. 12]

Fig. 12 is a view showing a both-side friction stir welding apparatus according to another embodiment of the present invention and a scheme that mechanically aligns axes of the upper and lower rotary tools.

[Fig. 13]

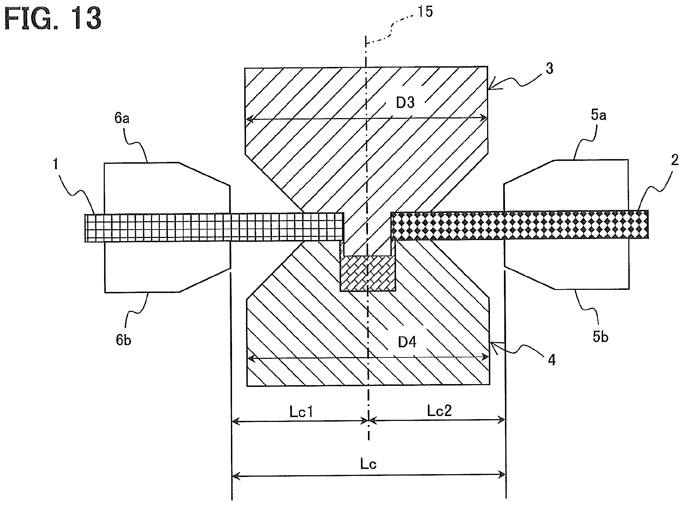

Fig. 13 shows a state during welding when the welding method according to the present invention is applied to butt welding of two metal plates, and also shows positional relationships between the upper and lower rotary tools and the inlet and outlet gripping devices (i.e., a distance between the inlet and outlet gripping devices).

[Fig. 14]

Fig. 14 is a diagram showing another state in which two metal plates are welded together in the case where the welding method according to the present invention is applied to the lap welding of the two metal plates and showing a gripping method.

[Fig. 15]

Fig. 15 is a diagram showing another state in which two metal plates are welded together in the case where the welding method according to the present invention is applied to the lap welding of the two metal plates and showing a gripping method.

[Fig. 16]

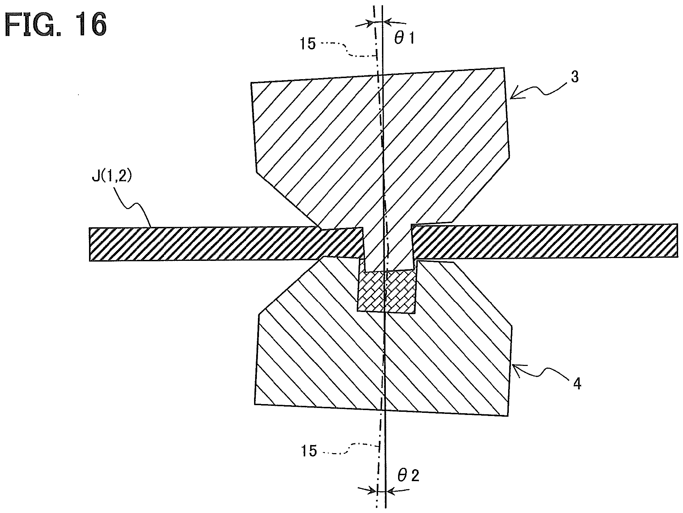

Fig. 16 is a cross sectional view taken along a welding direction (perpendicular to a line along which the diagram shown in Fig. 1 is taken) in which friction stir welding is performed while the upper and lower rotary tools rotate.

[Fig. 17]

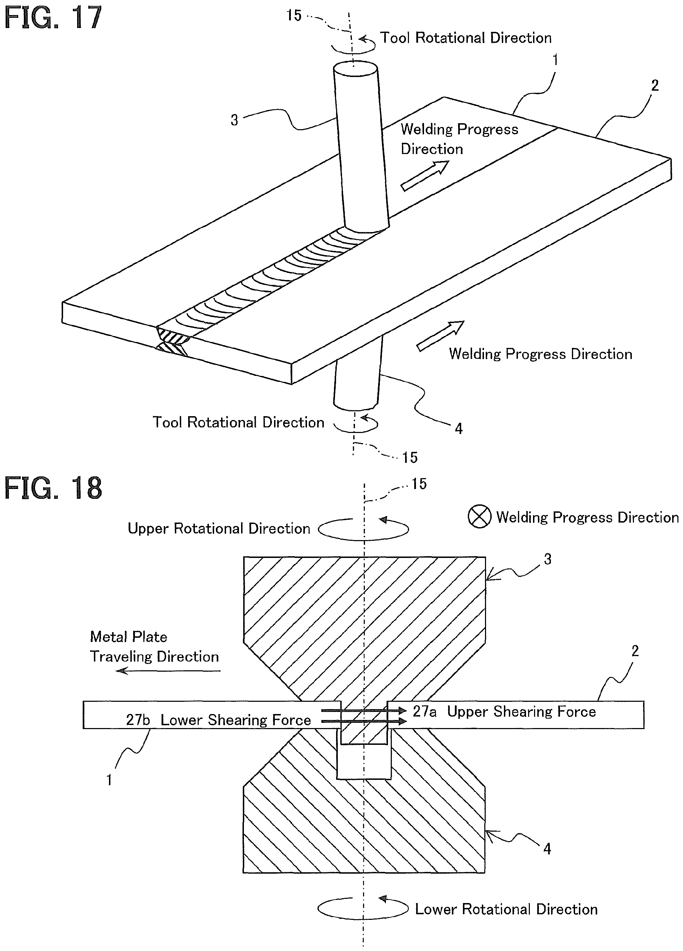

Fig. 17 is a perspective view showing a state in which friction stir welding is performed under the condition that: rotational directions of the upper and lower rotary tools are the same; the diameters of shoulders of the rotary tools are equal to each other; and the axes of the rotary tools are inclined at the same angle with respect to a traveling direction of the rotary tools.

[Fig. 18]

Fig. 18 is a cross sectional view showing the state in which the friction stir welding is performed under the condition that: the rotational directions of the upper and lower rotary tools are the same; the diameters of the shoulders of the rotary tools are equal to each other; and the axes of the rotary tools are inclined at the same angle with respect to the traveling direction of the rotary tools.

[Fig. 19]

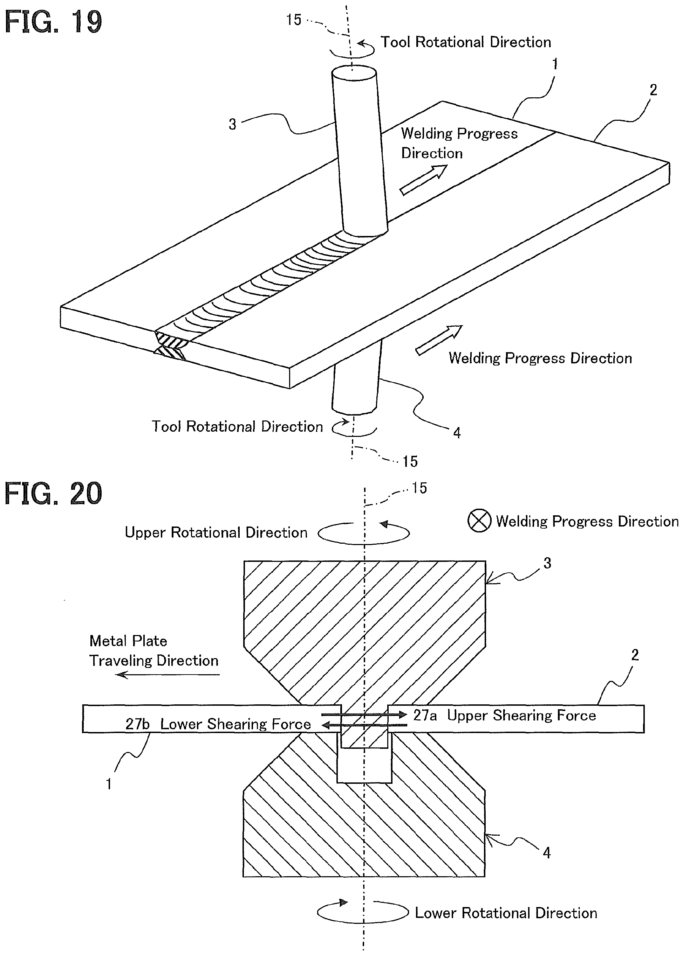

Fig. 19 is a perspective view showing a state in which the friction stir welding is performed under the condition that: the rotational directions of the upper and lower rotary tools are opposite to each other; the diameters of the shoulders of the rotary tools are equal to each other; and the axes of the rotary tools are inclined at the same angle with respect to the traveling direction of the rotary tools.

[Fig. 20]

Fig. 20 is a cross sectional view showing the state in which the friction stir welding is performed under the condition that: the rotational directions of the upper and lower rotary tools are opposite to each other; the diameters of the shoulders of the rotary tools are equal to each other; and the axes of the rotary tools are inclined at the same angle with respect to the traveling direction of the rotary tools.

[Fig. 21]

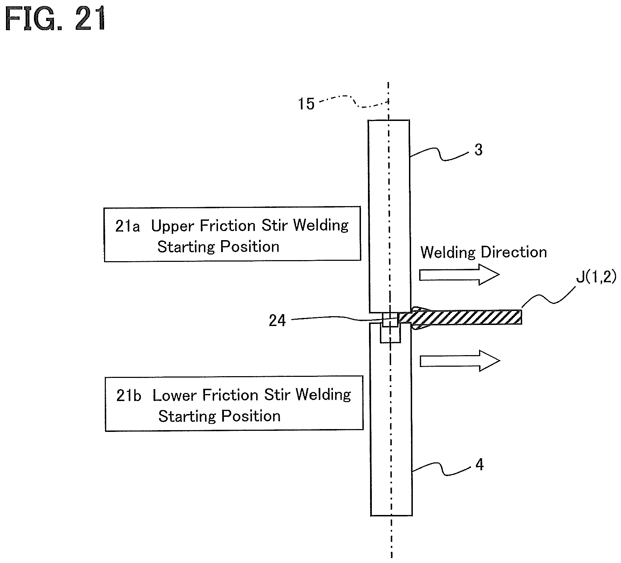

Fig. 21 is a diagram showing a state in which the upper and lower rotary tools are inserted from an edge surface of the joint portion while the inclination angles of the upper and lower rotary tools are set to 0 degrees (or the tools are not inclined).

[Fig. 22]

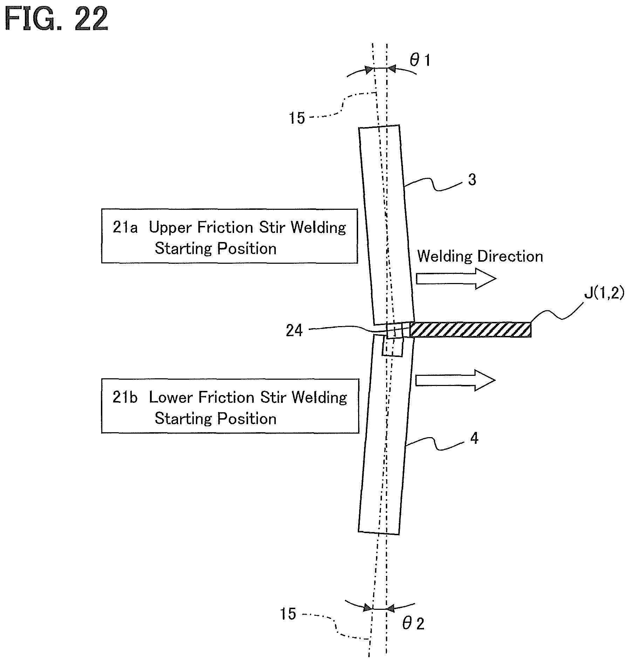

Fig. 22 is a diagram showing a state in which the upper and lower rotary tools are inserted from the edge surface of the joint portion while the upper and lower rotary tools are appropriately inclined.

[Fig. 23]

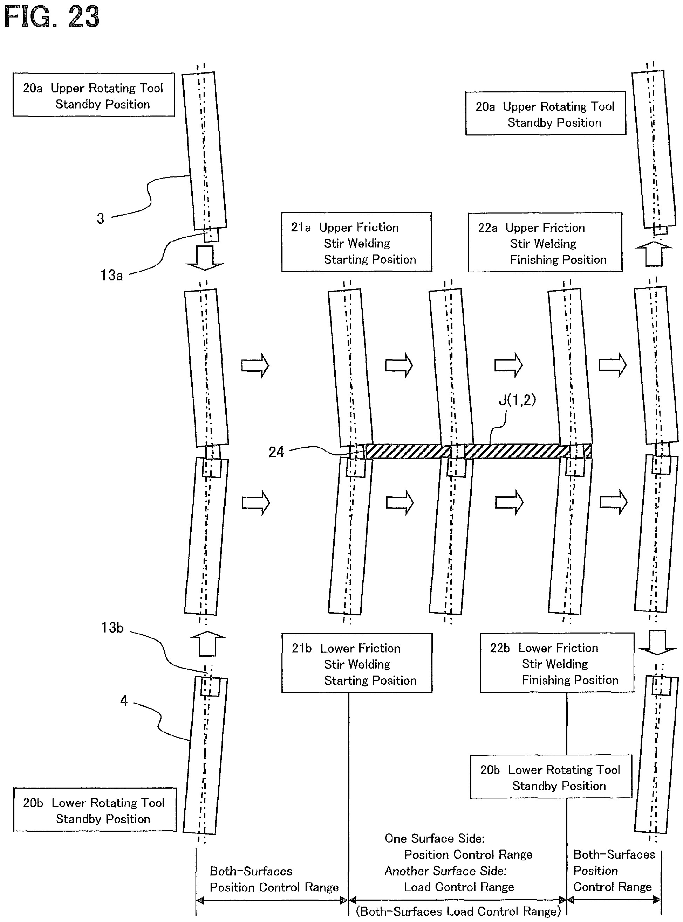

Fig. 23 is a diagram showing a method for performing the both-side friction stir welding without plunging while the axes of the rotary tools are inclined.
[Fig. 24]

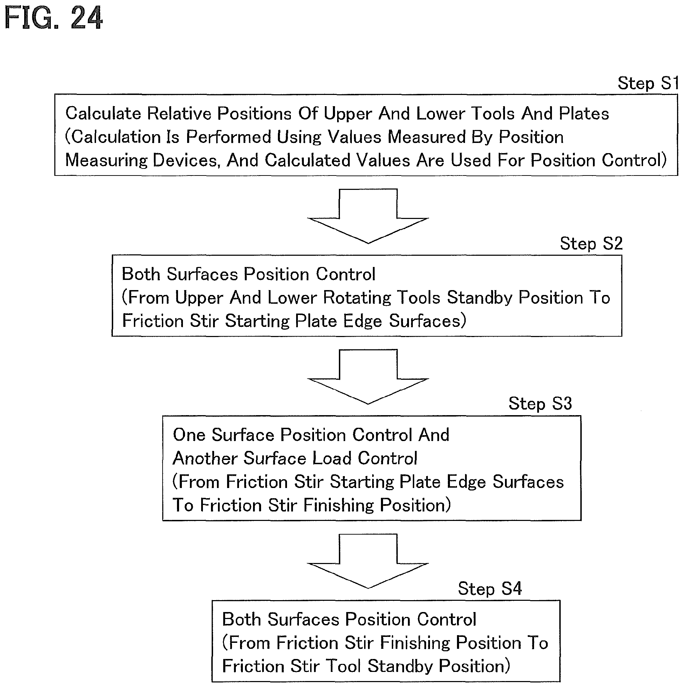

Fig. 24 is a control flowchart of procedures of a process that is performed by a control device.
[Fig. 25]

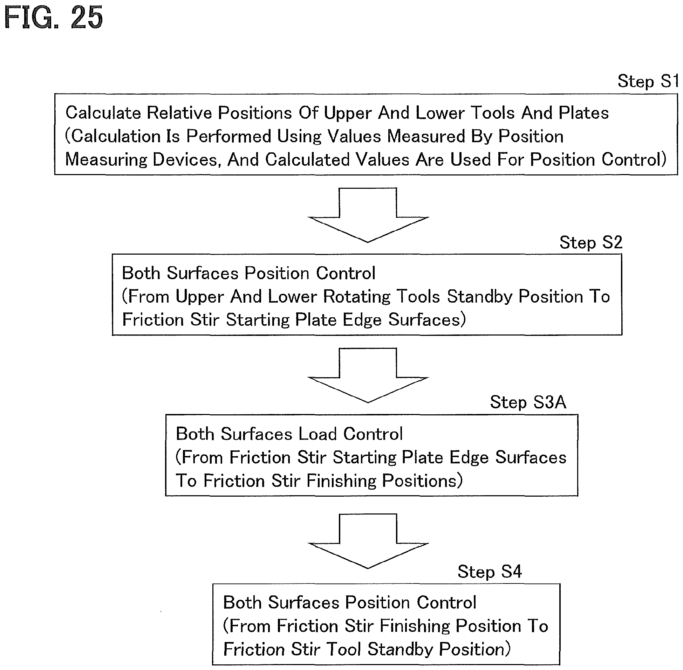

Fig. 25 is a control flowchart of another example of procedures of the process that is performed by the control device.

Mode for Carrying out the Invention

Next, an embodiment of the present invention is described with reference to the accompanying drawings.

Figs. 1 and 2 are enlarged cross sectional views of tip end portions of a tool set for both-side friction stir welding according to the embodiment of the present invention. Fig. 1 shows a state in which the tool set is used when welding is performed. Fig. 2 shows dimensional relationships of parts. The welding is butt welding as an example. In the present specification, a joint portion means portions of two metal plates which are to be joined together, and in the butt welding, it corresponds to butting portions of the two metal plates and in the lap welding, it corresponds to lap portions of the two metal plates.

In Figs. 1 and 2, the tool set for both-side friction stir welding according to the present embodiment includes first and second rotary tools 3 and 4 arranged in opposed relationship in the front and back surface sides of the joint portion (butting portion) J of the two metal plates 1 and 2, for frictionally stirring the joint portion. The first rotary tool 3 includes a tool body 3a having a shoulder portion 3c formed at a tip end portion thereof and having a shoulder surface 3b to press the joint portion J and a pin-shaped protruding portion (probe) 3d formed at the tip end portion of the tool body 3a to protrude from the shoulder surface 3b. The second rotary tool 4 includes a tool body 4a having a shoulder portion 3c formed at a tip end portion thereof and having a shoulder surface 4b to press the joint portion J and at least one recessed portion 4d formed at the shoulder surface 4b of the tool body 4a for receiving the tip end of the protruding portion 3d therein when the two metal plates are to be welded.

The protruding portion (probe) 3d of the first rotary tool 3 has a cylindrical outer shape, and the recessed portion 4d of the second rotary tool 4 has a cylindrical inner shape as well. When the tip end of the protruding portion (probe) 3d is inserted in the recessed portion 4d, a cylindrical ring-shaped gap is formed between the protruding portion (probe) 3d and the recessed portion 4d.

In the present specification, the "tool set" is a collective term of the two rotary tools 3 and 4. The welding method according to the present embodiment is performed using the tool set, and the outline of the welding method is explained below.

First, the first and second rotary tools 3 and 4 are arranged in opposed relationship in the front and back surface sides of the joint portion J of the two metal plates 1 and 2. Then, the first and second rotary tools 3 and 4 are rotated and moved in a direction to approach to each other so as to insert the tip end of the protruding portion 3d of the first rotary tool 3 into the recessed portion 4d of the second rotary tool 4 while the shoulder surfaces 3b and 4b of the first and second rotary tools 3 and 4 are pressed against the front and back surfaces of the joint portion J. Then, the first and second rotary tools 3 and 4 are moved under that state (the state that the tip end of the protruding portion 3d of the first rotary tool 3 is inserted into the recessed portion 4d of the second rotary tool 4 and the shoulder surfaces 3b and 4b of the first and second rotary tools 3 and 4 are pressed against the front and back surfaces of the joint portion J) along the joint portion J. When the friction stir is performed during the movement, the protruding portion 3d is inserted into the joint portion J through the entire region in the thickness direction of the joint portion J. Thus, the joint portion J is frictionally stirred in the entire region in the thickness direction thereof, whereby the two metal plates 1 and 2 are joined in the entire region of the joint portion J in the thickness direction thereof.

In the welding method according to the present embodiment, since the first and second rotary tools 3 and 4 arranged in opposed relationship in that front and back surface sides of the joint portion J are separated from each other, the amount of insertion of the protruding portion 3d of the first rotary tool 3 in the recessed portion 4d of the second rotary tool 4 (a distance between the first and second rotary tools 3 and 4) can be freely adjusted within a range in which the insertion mount is not zero. Thus, even when the metal plates 1 and 2 include those different in thickness, the protruding portion 3d of the first rotary tool 3 can be inserted into the recessed portion 4d of the second rotary tool 4 to match with the thicknesses of the metal plates 1 and 2, whereby the metal plates 1 and 2 having thicknesses in a range of the length of the protruding portion 3d can be subjected to friction stir welding over the entire range of the joint portion J from both surfaces of the metal plates 1 and 2. Thus, since a number of rotary tools each having different probe length have not to be prepared for metal plates of different thicknesses, the running cost is suppressed and thus the economy can be improved.

In addition, the first and second rotary tools 3 and 4 are separated and are driven independently from each other. Thus, differently from a bobbin tool, the friction stir by the shoulder portion 4c of the rotary tool in the back surface side is performed without a power transmitted through a probe, it is not necessary to set the diameter of the probe (protruding portion) 3d at least two or more times compared with that of the tool of a one-side friction stir welding apparatus as in case of the bobbin tool. It is, therefore, possible to prevent the diameter of the shoulder portion from being increased due to an increase in the diameter of the probe, and thus the size of the apparatus does not need to be increased, and the economy can be improved also at this point.

In addition, since the first and second rotary tools 3 and 4 frictionally stir the joint portion J of the metal plates 1 and 2 in the entire region in the thickness direction of the joint portion J, the strength of the joint portion J can be improved.

Further, since the first and second rotary tools 3 and 4 are separated from each other and the distance between the first and second rotary tools 3 and 4 can be adjusted, the load control can be used for pressing of at least one of the rotary tools against the joint portion (described later). Since the load control can be used in this way, by adjusting the amount of insertion of the protruding portion 3d of the first rotary tool 3 into the recessed portion 4d of the second rotary tool 4 depending on the thickness of the metal plates (thickness of the joint portion), the friction stir welding can be performed from both sides without fixing the distance between the upper and lower shoulder surfaces 3b and 4b. Thus, change in the pressure exerted upon the contact surfaces between the shoulder surfaces 3b and 4b and the surfaces of the joining portion of the metal plates due to slight change in the thickness of the metal plates can be prevented to occur, and variation in a thermal load can be reduced, so that a reduction in the quality of the joint portion J (joint defect) can be prevented and it is possible to join the metal plates with high reliability.

Materials of the first and second rotary tools 3 and 4 are described below.

One-side friction stir welding is placed in practical use in the field of nonferrous alloys, such as aluminum, that are materials of relatively low melting points. In general, friction stir welding requires increasing temperature of material to nearly 80% of the melting point with heat due to friction stirring. Consequently, in the welding of materials whose melting points exceed 1,000°C, friction stirring input energy per unit welding length increases and deformation resistance values also increase. Rotary tools therefore require high heat resistant strength and high fracture toughness, so that expensive materials such as polycrystalline diamonds have to be used.

Additionally, even if such expensive materials are used for the tools, tool life is reduced due to thermal impacts, tool wear, and a bending stress acting upon probes or protruding portions, and this hinders friction stir welding from being widely used for materials of high melting point exceeding 1,000°C.

In the present embodiment, since the friction stir welding is performed from both sides of the front and back surfaces of the joint portion, it is possible to prevent a thermal loss that is caused by a backing plate in one-side friction stir welding. Thus, a softened region of the joint portion is increased, and it is possible to reduce a thermal load applied to one rotary tool to 1/2 or less. By using the load control for the pressing of at least one of the rotary tools against the joint portion (described later), change in the pressure exerted upon the contact surfaces between the shoulder surfaces 3b and 4b and the surfaces of the joint portion of the metal plates due to slight change in the thickness of the metal plates can be prevented to occur, and variation in a thermal load can be reduced. Thus, it is not necessary to use an expensive material such as polycrystalline diamond as materials of the rotary tools, and the first and second rotary tools can be made of cemented carbide alloy of sintered tungsten carbide or a tungsten alloy. As a result, it is possible to provide the rotary tools of long service life and superior in economy in the frictionally stir welding of metal plates having a melting point of 1,000°C or more.

In addition, since the first and second rotary tools 3 and 4 are separated from each other, the axes of the rotary tools 3 and 4 can be inclined such that the tip end portions of the first and second rotary tolls 3 and 4 move ahead in the welding progress direction (described later). Thus, since the pressing force against the metal plates 1 and 2 can be increased, the flowability of the joint portion by the friction stir welding can be improved and thus it is possible to suppress joint defect and join the metal plates with high reliability.

In addition, since the first and second rotary tools 3 and 4 are separated from each other, the first and second rotary tools 3 and 4 can be rotated in opposite directions in the front and back surface sides of the joint portion J (described later). Thus, a shearing force due to stirring from the front surface side and a shearing force due to stirring from the back surface side are canceled out within the interior of the joint portion, and this prevents the materials from rupturing and it is possible to join the metal plates with high reliability. This effect is high especially when the diameters of the shoulder surfaces 3b and 4b of the first and second rotary tools 3 and 4 are equal to each other.

Fig. 3 is a time chart showing a joint distance (time after the start of the welding) between the first and second rotary tools 3 and 4 and a change in a load applied to a spindle rotation motor for the rotary tools.

When the rotary tool that does not have the probe or the protruding portion moves in the direction in which the welding is performed and an eccentric load is applied to the shoulder surface (that contacts the surfaces of the metal plates) of the rotary tool, a chatter vibration may occur to cause the friction stir to be uneven and thereby cause a joint defect.

According to the experiment conducted by the present inventors, it has been confirmed that when the length of the part (that is to be inserted into the recessed portion 4d of the second rotary tool 4) of the protruding portion (probe) 3d of the first rotary tool 3 is larger than 0 mm and the welding starts and then several seconds elapse, a chatter vibration occurs, and after that, the chatter vibration can be suppressed. This is because the materials are softened and filled in the recessed portion 4d, and the protruding portion 3d of the first rotary tool 3 receives inner pressure through the softened materials filled in the recessed portion 4d in the recessed portion 4d of the second rotary tool 4, so that a vibration damping force acts. As a result, chattering is suppressed and it is possible to realize a uniform friction stir, and thus also in this point, it is possible to suppress joint defect and join the metal plates with high reliability.

In addition, if the material of an amount that corresponds to the gap is filled in the recessed portion 4d before the start of the welding, the vibration can be prevented.

Fig. 4 is a diagram showing the state in which the tool set is used when the welding is performed in the case where the positions of the first and second rotary tools are reversed with respect to the front and back surfaces of the joint portion J. In Fig. 1, the first rotary tool 3 that has the protruding portion (probe) 3d formed at the tip end portion of the tool body 3a is placed on the side of the front surface of the joint portion J, while the second rotary tool 4 that has the recessed portion 4d formed at the tip end portion of the tool body 4a is placed on the side of the back surface of the joint portion J. As shown in Fig. 4, even when the positions of the first and second rotary tools 3 and 4 are reversed with respect to the front and back surfaces of the joint portion J, the effects of the friction stir welding are not changed.

The dimensional relationships of the parts of the first rotary tool 3 and the dimensional relationships of the first and second rotary tools 3 and 4 are described with reference to Fig. 2 and Table 1.

| | Thicknesses of metal plates | Diameter D1 of shoulder portion | Diameter d1 of protruding portion | Length L1 of protruding portion |
|---|---|---|---|---|
| 1 | Larger than 0 mm and equal to or less than 1 mm | Larger than 3mm and equal to or less than 8 mm | Larger than 1 mm and equal to or less than 4 mm | Larger than thickness of joint portion and equal to or less than 2 mm |
| 2 | Larger than 1 mm and equal to or less than 3 mm | Larger than 5 mm and equal to or less than 12 mm | Larger than 1 mm and equal to or less than 6 mm | Larger than thickness of joint portion and equal to or less than 4 mm |
| 3 | Larger than 3 mm and equal to or less than 6 mm | Larger than 8 mm and equal to or less than 15 mm | Larger than 2 mm and equal to or less than 8 mm | Larger than thickness of joint portion and equal to or less than 7 mm |
| 4 | Larger than 6 mm and equal to or less than 10 mm | Larger than 12 mm and equal to or less than 20 mm | Larger than 4 mm and equal to or less than | Larger than thickness of joint portion and equal to |
| | | | 10 mm | or less than 11 mm |

Table 1 The thicknesses of the metal plates, the diameter of the shoulder portion, and the shape (diameter and length) of the protruding portion

The diameter D1 of the shoulder portion 3c (shoulder surface 3b) of the first rotary tool 3 (that has the protruding portion (probe) 3d formed at the tip end portion of the tool body 3a), the diameter d1 of the protruding portion 3d, and the length L1 of the protruding portion 3d vary depending on the thicknesses of the metal plates 1 and 2 (that are to be subjected to the friction stir welding), deformation resistance, and welding states.

<Dimensional relationships of first rotary tool 3 (diameter D1 of the shoulder portion)>

First, the diameter D1 of the shoulder portion 3c (shoulder surface 3b) of the first rotary tool 3 is described. A main factor for determining the diameter D1 of the shoulder portion is the amount of heat that is transferred to the joint portion per unit time. In the friction stir welding, a joint defect may occur due to a lack of the amount of frictional heat or an excessive amount of frictional heat. It is, therefore, necessary that the diameter D1 of the shoulder portion be selected to generate a desired amount of frictional heat.

According to the experiment (in which plates having a thickness of up to 10 mm are used) conducted by the present inventors, an excellent joint portion was formed under the setting states shown in Table 1. Specifically, the friction stir welding can be performed under the state that the amount of frictional heat is not insufficient or excessive in the following cases: where the thicknesses of the metal plates are larger than 0 mm and equal to or less than 1 mm and the diameter D1 of the shoulder portion is larger than 3 mm and equal to or less than 8 mm; where the thicknesses of the metal plates are larger than 1 mm and equal to or less than 3 mm and the diameter D1 of the shoulder portion is larger than 5 mm and equal to or less than 12 mm; where the thicknesses of the metal plates are larger than 3 mm and equal to or less than 6 mm and the diameter D1 of the shoulder portion is larger than 8 mm and equal to or less than 15 mm; and where the thicknesses of the metal plates are larger than 6 mm and equal to or less than 10 mm and the diameter D1 of the shoulder portion is larger than 12 mm and equal to or less than 20 mm. Thus, an excellent joint portion can be obtained while a joint defect does not occur.

(Diameter d1 of protruding portion)

Next, the diameter d1 of the protruding portion 3d of the shoulder portion 3c (shoulder surface 3b) of the first rotary tool 3 that has the protruding portion 3d (probe) formed at the tip end portion of the tool body 3a is described below.

A main factor for determining a lower limit of the diameter d1 of the protruding portion is a moment that acts on the protruding portion 3d when the friction stir welding is performed. When the diameter d1 of the protruding portion 3d is small, the section modulus cannot be ensured and the protruding portion 3d may be fractured. It is, therefore, necessary that the section modulus be set so that the protruding portion 3d is not fractured.

A main factor for determining an upper limit of the diameter d1 of the protruding portion is the amount of frictional heat that is generated when the friction stir welding is performed. The amount of frictional heat is determined by a contact area of the shoulder surface 3b with the surfaces of the metal plates. The area of the shoulder surface 3b of the first rotary tool 3 that contacts the surfaces of the metal plates varies depending on the diameter D1 of the shoulder portion and the diameter d1 of the protruding portion. The diameter d1 of the protruding portion is determined based on the premise that the diameter d1 of the protruding portion is smaller than the diameter D1 of the shoulder portion. When the ratio of the diameter d1 of the protruding portion to the diameter D1 of the shoulder portion is large, the contact area with the surfaces of the metal plates is small and the amount of frictional heat may be insufficient. It is, therefore, necessary that the diameter d1 of the protruding portion be set so that a joint defect does not occur due to a lack of the amount of frictional heat.

According to the experiment (in which the plates having a thickness of up to 10 mm are used) conducted by the present inventors, the setting states shown in Table 1 were obtained. Specifically, it has been confirmed that the protruding portion 3d is not fractured due to the moment that acts on the protruding portion 3d when the friction stir welding is performed in the following cases: where the thicknesses of the metal plates are larger than 0 mm and equal to or less than 1 mm and the diameter d1 of the protruding portion 3d is larger than 1 mm and equal to or less than 4 mm; where the thicknesses of the metal plates are larger than 1 mm and equal to or less than 3 mm and the diameter d1 of the protruding portion 3d is larger than 1 mm and equal to or less than 6 mm; where the thicknesses of the metal plates are larger than 3 mm and equal to or less than 6 mm and the diameter d1 of the protruding portion 3d is larger than 2 mm and equal to or less than 8 mm; and where the thicknesses of the metal plates are larger than 6 mm and equal to or less than 10 mm and the diameter d1 of the protruding portion 3d is larger than 4 mm and equal to or less than 10 mm.

It has been confirmed that when the upper limit of the diameter d1 of the protruding portion is selected from the range shown above and the diameter D1 of the shoulder portion is set under the states such as the thicknesses of the metal plates and the deformation resistance, the friction stir welding can be performed under the state that the amount of frictional heat is not insufficient. Thus, an excellent joint portion can be formed while a joint defect does not occur.

(Length L1 of protruding portion)

Next, the length L1 of the protruding portion 3d of the shoulder portion 3c (shoulder surface 3b) of the first rotary tool 3 that has the protruding portion 3d (probe) formed at the tip end portion of the tool body 3a is described.

A main factor for determining the length L1 of the protruding portion is the thicknesses of the metal plates. When the length L1 of the protruding portion 3d is smaller than the thicknesses of the metal plates, a non-joint portion that is generally called a kissing bond is formed. It is, therefore, necessary that the length L1 of the protruding portion 3d be set so that a non-joint portion is not formed and the plates can be welded together through an entire groove.

According to the experiment (in which the plates having a thickness of up to 10 mm are used) conducted by the present inventors, the setting states shown in Table 1 were obtained. Specifically, it has been confirmed that the plates can be welded together through the entire groove without a non-joint portion that is generally called a kissing bond in the following cases: where the thicknesses of the metal plates are larger than 0 mm and equal to or less than 1 mm and the length L1 of the protruding portion 3d is larger than the thicknesses of the metal plates and equal to or less than 2 mm; where the thicknesses of the metal plates are larger than 1 mm and equal to or less than 3 mm and the length L1 of the protruding portion 3d is larger than the thicknesses of the metal plates and equal to or less than 4 mm; where the thicknesses of the metal plates are larger than 3 mm and equal to or less than 6 mm and the length L1 of the protruding portion 3d is larger than the thicknesses of the metal plates and equal to or less than 7 mm; and where the thicknesses of the metal plates are larger than 6 mm and equal to or less than 10 mm and the length L1 of the protruding portion 3d is larger than the thicknesses of the metal plates and equal to or less than 11 mm.

<Description of dimensional relationships of second rotary tool 4>

The diameter D2 of the shoulder portion 4c (shoulder surface 4b) of the second rotary tool 4 that has the recessed portion 4d formed at the tip end portion of the tool body 4a, the diameter d2 of the recessed portion 4d, and the depth L2 of the recessed portion 4d are determined on the basis of the diameter D1 of the shoulder portion of the first rotary tool 3, the diameter d1 of the protruding portion and the length L1 of the protruding portion. According to the experiment conducted by the present inventors, it is preferable that the diameter D2 of the shoulder portion of the second rotary tool 4 be equal to the diameter D1 of the shoulder portion of the first rotary tool 3. It is preferable that the diameter d2 of the recessed portion be larger than the diameter d1 of the protruding portion and be equal to or less than a value of d1 + 2 mm. When the depth L2 of the recessed portion is longer than the length L1 of the protruding portion and is equal to or less than a value of L1 + 1 mm, an excellent joint portion was obtained.

```
(Description of diameter d2 (= d1 + 2 mm) and length L2 (=

L1 + 1 mm) of recessed portion)
```

In the welding method according to the present invention, it is preferable that the friction stir welding be performed under the state that the axes of the first and second rotary tools 3 and 4 are inclined so that the tip end portions of the first and second rotary tools 3 and 4 move ahead in the welding progress direction (perpendicular to the surface of the paper sheet of Fig. 1) as described later.
In this case, the diameter d2 and length L2 of the recessed portion are determined on the basis of geometric relationships among the thicknesses of the metal plates that are to be subjected to the friction stir welding, the diameter d1 and length L1 of the protruding portion 3d of the first rotary tool 3, the length of a part (that is to be inserted into the recessed portion 4d) of the protruding portion 3d, and inclination angles of the axes of the first and second rotary tools 3 and 4.
The diameter d2 and length L2 of the recessed portion are set to the minimum values so that the protruding portion 3d can be inserted into the recessed portion 4d without interference in the recessed portion 4d and the rotary tools can be inclined.
When the diameter d2 and length L2 of the recessed portion are increased, the protruding portion 3d can be inserted into the recessed portion 4d without interference in the recessed portion 4d and the rotary tools can be inclined. However, when the diameter d2 and length L2 of the recessed portion are excessively increased, the amount of the materials that flow into the recessed portion 4d is increased. This may cause a joint defect.
According to the experiment (in which the plates having a thickness of up to 10 mm are used) conducted by the present inventors, it has been confirmed that when the diameter d2 of the recessed portion 4d is equal to or less than a value of d1 + 2 mm and the length L2 of the recessed portion 4d is equal to or less than a value of L1 + 1 mm, an excellent joint portion can be formed without a joint defect and interference of the protruding portion 3d in the recessed portion 4d.
Although not shown, the shoulder surfaces 3b and 4b of the first and second rotary tools 3 and 4 may be processed by means of the materials of the metal plates that are to be subjected to the friction stir welding or the like so that spiral grooves are formed in the shoulder surfaces 3b and 4b; the protruding portion 3b may be processed so that a screw is formed in the protruding portion 3d; and the recessed portion 4d may be processed so that a female screw is formed in the recessed portion 4d. In this case, a stirring efficiency can be improved in the friction stir welding.
Figs. 1 and 2 show that the diameter d1 of the probe or the protruding portion is constant regardless of the position in the direction in which the length L1 is measured and the diameter d2 of the recessed portion is constant regardless of the position in the direction in which the length L2 is measured. Even when the protruding portion and the recessed portion are formed in a tapered shape, the effects of the friction stir welding are not changed.
Figs. 5 to 8 are outline cross sectional views of other shapes of the tool set for both-side friction stir welding according to the embodiment of the present invention.
Fig. 5 shows a first modified embodiment. In the first modified embodiment, a first rotary tool 3A has a similar configuration to the first rotary tool 3 shown in Fig. 1. The first rotary tool 3A has a pin-shaped protruding portion (probe) 3d that is formed at the tip end portion of the tool body 3a and protrudes from the shoulder surface 3b. However, the length L1 of the protruding portion 3d is smaller than that of the first rotary tool 3 shown in Fig. 1. A second rotary tool 4A has a ring-shaped protruding portion 4e. The protruding portion 4e protrudes from the shoulder surface 4b of the tool body 4a and has a conical outer circumferential surface and a cylindrical inner circumferential surface. The recessed portion 4d is formed in the ring-shaped protruding portion 4e.
When the friction stir is performed, the protruding portion 3d and the protruding portion 4e are inserted into the joint portion J in the direction of the thickness of the joint portion J. Both the protruding portion 3a and the protruding portion 4e frictionally stir all the regions (that extend through the entire thicknesses of the metal plates) of the joint portion J.

When the tool set has the modified configuration shown in Fig. 5, the length L1 of the pin-shaped protruding portion (probe) 3d that is formed at the tip end portion of the tool body 3a of the first rotary tool 3A and protrudes from the shoulder surface 3b can be reduced, and a rotating bending moment that acts on the protruding portion 3d upon friction stir welding is reduced. Thus, even if the thicknesses of the metal plates 1 and 2 are increased, the friction stir welding can be performed without damaging the protruding portion.

Fig. 6 shows a second modified embodiment. In the second modified embodiment, a second rotary tool 4B has a similar configuration to the second rotary tool 4A shown in Fig. 5. A first rotary tool 3B has a ring-shaped second protruding portion 3e in addition to the configurations of the first rotary tools 3 and 3A described above. The ring-shaped second protruding portion 3e is formed at the tip end portion of the tool body 3a and protrudes from the shoulder surface 3b. The second protruding portion 3e has a length that is nearly equal to the length of the protruding portion 3d. The second protruding portion 3e has a cylindrical outer circumferential surface and a conical inner circumferential surface. The protruding portion 3e surrounds the protruding portion 3d. An annular recessed portion 3f is formed between the protruding portion 3e and the protruding portion 3d and receives the tip end of the protruding portion 4e of the second rotary tool 3B.

When the friction stir is performed, the protruding portion 3d, the protruding portion 4e, and the protruding portion 3e are inserted into the joint portion J in the direction of the thickness of the joint portion J. The two protruding portions 3d and 3e and the protruding portion 4e frictionally stir all the regions (that extend through the entire thicknesses of the metal plates) of the joint portion J.

Fig. 7 shows a third modified embodiment. In the third modified embodiment, a first rotary tool 3C has a ring-shaped second protruding portion 3g instead of the second protruding portion 3e shown in Fig. 6. The ring-shaped second protruding portion 3g is shorter than the protruding portion 3d and has a cylindrical inner circumferential surface and a cylindrical outer circumferential surface. A second rotary tool 4C has a ring-shaped protruding portion 4f instead of the protruding portion 4e shown in Figs. 5 and 6. The ring-shaped protruding portion 4f has a cylindrical inner circumferential surface and a cylindrical outer circumferential surface. An annular second recessed portion 4g is formed in a ring-shaped edge surface of the protruding portion 4f and has a depth that is smaller than that of the recessed portion 4d. The annular second recessed portion 4g receives the tip end of the second protruding portion 3g.

When the friction stir is performed, the protruding portion 3d is inserted into the joint portion J in the direction of the thickness of the joint portion J and extends through the entire thickness of the joint portion J, and the second protruding portion 3g and the protruding portion 4f are inserted into the joint portion J in the direction of the thickness of the joint portion J so that the protruding portions 3d, 3g, and 4f doubly frictionally stir all the regions (that extend through the entire thicknesses of the plates) of the joint portion J.

Fig. 8 shows a fourth modified embodiment. In the fourth modified embodiment, a first rotary tool 3D has a similar configuration to the first rotary tool 3C shown in Fig. 7. The ring-shaped second protruding portion 3g has a length that is nearly equal to the protruding portion 3d. A second rotary tool 4D has a ring-shaped protruding portion 4h formed to protrude from the shoulder surface 4b of the tool body 4a in a similar manner to the second rotary tool 4A shown in Fig. 5. The recessed portion 4d is formed in the inner side of the ring shape of the protruding portion 4h and has a diameter that is larger than that of the recessed portion 4d shown in Fig. 5. The tip ends of the protruding portion 3d and the second protruding portion 3g of the first rotary tool 4D are inserted into the recessed portion 4d.

When the friction stir is performed, the protruding portion 3d, the second protruding portion 3g, and the protruding portion 4h are inserted into the joint portion J in the direction of the thickness of the joint portion J and frictionally stir all the regions (that extend through the entire thicknesses of the plates) of the joint portion J.

In the modified embodiments shown in Figs. 6 to 8, the length L1 of the protruding portion (probe) 3d can be reduced similarly to the modified embodiment shown in Fig. 5. Thus, even if the thicknesses of the metal plates 1 and 2 are increased, the friction stir welding can be performed without damaging the protruding portion.

Next, an embodiment of a both-side friction stir welding apparatus that carry out the welding method according to the present invention will be explained.

Fig. 9 is a perspective view of the both-side friction stir welding apparatus according to the embodiment of the present invention with a part of the both-side friction stir welding apparatus removed. Fig. 10 is a schematic front view of main part of the both-side friction stir welding apparatus. Fig. 11 is a view showing an upper half of the both-side friction stir welding apparatus together with a control system.

In Figs. 9 to 11, the both-side friction stir welding apparatus for metal plates according to the embodiment comprises an inlet gripping device 5 and outlet gripping device 6 for gripping front and back surfaces of the two metal plates 1 and 2; upper and lower tool rotation devices 7, 8 having the first and second rotary tools 3, 4 attached thereto in opposed relationship in the front and back surface sides of the joint portion J of the two metal plates 1, 2, for rotating the first and second rotary tools 3, 4; upper and lower tool pressing devices 45, 46 for moving the first and second rotary tools 3, 4 attached to the tool rotation devices 7, 8 in a direction to approach to each other to press the first and second rotary tools 3, 4 against the front and back surfaces of the joint portion of the metal plates 1, 2; and moving devices 47, 48 for moving the first and second rotary tools 3, 4 attached to the tool rotation devices 7, 8 along the joint portion J.

As described above, the first rotary tool 3 has the protruding portion (probe) 3d that is formed at the tip end portion of the tool body 3a and protrudes from the shoulder surface 3b. The second rotary tool 4 has the recessed portion 4d that is formed at the shoulder surface 4b of the tool body 4a and receives the tip end of the protruding portion 3d. In the present embodiment, the first rotary tool 3 is attached to the upper tool rotation device 7, while the second rotary tool 4 is attached to the lower tool rotation device 8. In the description below, therefore, the first rotary tool 3 is called an upper rotary tool, and the second rotary tool 4 is called a lower rotary tool.

The upper and lower tool pressing devices 45, 46 are controlled to insert the tip end of the protruding portion 3d of the upper rotary tool 3 into the recessed portion 4d of the lower rotary tool 4 and press the shoulder surfaces 3b, 4b of the shoulder portions 3c, 4c of the upper and lower rotary tools 3, 4 against the front and back surfaces of the joint portion J when the tool pressing devices 45, 46 move the first and second rotary tools (3, 4) attached to the tool rotation devices 7, 8 in the direction to approach to each other,

The upper and lower moving devices 47, 48 are controlled to move the upper and lower rotary tools 3, 4 along the joint portion J under the state that the tip end of the protruding portion 3d of the upper rotary tool 3 is inserted into the recessed portion 4d of the lower rotary tool 4 and the shoulder surfaces 3b, 4b of the shoulder portions 3c, 4c of the upper and lower rotary tools 3, 4 are pressed against the front and back surfaces of the joint portion J thereby to frictionally stir the joint portion J in the entire region in the thickness direction of the joint portion J.

The inlet gripping device 5 and the outlet gripping device 6 have upper and lower gripping plates 5a, 5b and 6a, 6b, respectively, the upper and lower gripping plates 5a, 5b and 6a, 6b are openable/closable by opening/closing mechanisms including driving devices not shown.

The upper friction stirring device 7 and the lower friction stirring device 8 include an upper cylindrical body 49 and a lower cylindrical body 50, respectively, to retain the upper and lower rotary tools 3, 4, the cylindrical bodies 49 and 50 being encased at least partially in an upper body casing 51 and a lower body casing 52, respectively. The cylindrical bodies 49, 50 contain an upper rotation motor 53a and a lower rotation motor 53b, and these motors rotationally drive the rotary tools 3, 4, respectively.

As shown in Fig. 11, the upper tool pressing device 45 includes a pressing motor 61a provided in the upper body casing 51, a screw 62a rotationally driven by the pressing motor 61a, and a support frame 63a that moves linearly in an axial direction of the screw 62a by rotation of the screw 62a. The cylindrical body 49 of the upper tool rotation device 7 is connected to the support frame 63a so as to move linearly in the axial direction of the screw 62a together with the support frame 63a.

Although not shown, the lower pressing device 46 is configured in the same manner. In the description below, reference numbers that denote elements of the lower tool pressing device 46 equivalent to those of the upper tool pressing device 45 are each denoted by adding a suffix "b" instead of the suffix "a".

The upper moving device 47 includes left and right upper rails 11 and 11 both fixed to the upper housing 9; left and right traveling frames 65a and 65a that support the upper body casing 51 via axles 64a and 64b, respectively; left/right and front/rear wheels 66a and 66a provided on the left and right traveling frames 65a, 65a in order to travel on the upper rails 11, 11; and traveling motors 67a and 67a mounted on the left and right traveling frames 65a, 65a in order to drive one of the front and rear wheels 66a, 66a. The upper tool rotation device 7 and the upper tool pressing device 45 travel on the upper rails 11, 11 orthogonally to a traveling direction of the metal plates 1 and 2, along the joint portion J.

The lower moving device 48 is configured in the same manner, and the lower tool rotation device 8 and the lower tool pressing device 46 travel on the lower rails 12, 12 fixed to the lower housing 10, orthogonally to the traveling direction of the metal plates 1, 2, along the joint portion J. In the description below, reference numbers that denote elements of the lower moving device 48 equivalent to those of the upper moving device 47 are denoted by adding a suffix "b" instead of the suffix "a".

In the construction shown in Figs. 9 to 11, when the upper and lower tool rotation devices 7 and 8 travel on the upper and lower rails 11, 11 and 12, 12, respectively, axial alignment between the upper rotary tool 3 and lower rotary tool 5 is carried out by an electrical control scheme in which a control device 83 (described later) synchronously controls the traveling motors 67a, 67a of the upper moving device 47 and the traveling motors 67b, 67b of the lower moving device 48.

Fig. 12 shows a scheme that mechanically aligns axes of the upper and lower rotary tools 3 and 4. The upper and lower tool rotation devices 7 and 8 are fixed to the upper and lower housings 9A and 10A integrally coupled to each other to form a C-shaped structure. A traveling device 74 that includes wheels 71, a screw 72, and a traveling motor 73 is provided for the C-shaped upper and lower housings 9A and 10A. The wheels 71 are provided on the lower housing 10A, the screw 72 engages with the lower housing 10A, and the traveling motor 73 rotationally drives the screw 72. Upon the driving motor 73 being driven by a command sent from a control device 75, the screw 72 rotates and the upper and lower housings 9A and 10A travel in the direction orthogonal to the traveling direction of the metal plates 1 and 2, with the upper and lower rotary tools 3 and 4 axially aligned.

Returning to Fig. 11, the welding apparatus according to the present embodiment further comprises an upper inclining support device 76a and a lower inclining support device 76b for supporting the upper and lower rotary tools 3 and 4 so as to incline the axes of the upper and lower rotary tools 3 and 4 such that the tip end portions of the upper and lower rotary tolls 3 and 4 move ahead in a direction of movement of the rotary tools 3 and 4. The upper and lower inclining support devices 76a, 76b are of an angle adjustable type, and include angle control motors 77a and 77b provided on one of the left and right traveling frame pairs 65a, 65a and 65b, 65b for rotationally drive the shafts 64a, 64b supported by the traveling frames 65a, 65b. The inclining support devices 76a, 76b may be of a fixed type that fixedly supports the upper and lower rotary tools 3, 4 with the axes thereof in inclined.

A control system provided in the welding apparatus of the present embodiment will be described later herein.

<Welding method>

The following describes the method (according to an embodiment of the present invention) for performing the both-side friction stir welding and joining metal plates using the aforementioned welding apparatus with reference to Figs. 13 to 25.

Fig. 13 shows a state during welding when the welding method according to the present invention is applied to butt welding of two metal plates, and also shows positional relationships between the upper and lower rotary tools 3 and 4 and the inlet and outlet gripping devices 5 and 6 (i.e., a distance between the inlet and outlet gripping devices).

As shown in Fig. 13, when the metal plates 1 and 2 are subjected to butt welding by the both-side friction stir welding, the upper and lower rotary tools 3 and 4 are inserted into a joint portion J (butting portion) of the metal plates 1 and 2, from a front surface side and a back surface side of the joint portion J, respectively, while the tools 3 and 4 are rotated to frictionally stir the joint portion J by utilizing frictional heat generated by the rotation of the tools 3 and 4 thereby to weld the metal plates 1 and 2.

In the joining method according to the present embodiment, at first, the inlet gripping device 5 and outlet gripping device 6 arranged to sandwich the upper and lower rotary tools 3 and 4 in the opposed sides thereof are actuated to grip the front and back surfaces of the two metal plates 1 and 2. Next, the tool pressing devices 45 and 46 are actuated to move the upper and lower rotary tools 3 and 4 that is disposed in opposed relationship in the front surface side and the back surface side of the butting portion forming the joint portion J of the two metal plates 1 and 2, in a direction in which the upper and lower rotary tools 3 and 4 approach to each other so as to insert the protruding portion (probe) 3d of the upper rotary tool 3into the recessed portion 4d of the lower rotary tool 4 thereby to frictionally stir the joint portion in the entire region in the thickness direction of the joint portion J and join the metal plates 1 and 2 without a non-joint portion.

In addition, the tool rotating driving devices 7 and 8 are actuated to rotate the upper and lower rotary tools 3 and 4 arranged in opposed relationship in opposite directions while the shoulder surfaces 3b and 4b of the rotary tools 3 and 4 are pressed against the front and back surfaces of the butting portion forming the joint portion J of the two metal plates 1 and 2 so that the friction stir is performed. At this time, the pressing forces of the upper and lower rotary tools 3 and 4 against the butting portion J (joint portion) of the metal plates 1 and 2 from the front and back surface sides of the butting portion J are made equal to each other.

Under the state (the state that the protruding portion 3d of the upper rotary tool 3 is inserted into the recessed portion 4d of the lower rotary tool 4 and the shoulder surfaces 3b and 4b of the upper and lower rotary tools 3 and 4 are pressed against the front and back surfaces of the joint portion J), the moving devices 47 and 48 are actuated to move the upper and lower rotary tools 3 and 4 along the butting portion J in the direction perpendicular to the traveling direction of the metal plates 1 and 2 while rotating the upper and lower rotary tools 3 and 4 thereby to perform the friction stir welding.

Further, in the welding method according to the present embodiment, the inclination supporting devices 76a and 76b incline the upper and lower rotary tools 3 and 4 such that the tip end portions thereof face ahead in the moving direction of the rotary tools 3 and 4. In this state, the rotary tools 3 and 4 is moved in the direction perpendicular to the traveling direction of the metal plates 1 and 2 while rotating thereby to perform the friction stir welding (refer to Fig. 16, Fig. 17, Fig. 19, Fig. 22 and Fig. 23).

Figs. 14 and 15 show a state during welding when the welding method according to the present invention is applied to the lap welding of two metal plates, and Figs. 14 and 15 show the difference in gripping system when the welding method of the present invention is applied to the lap welding of two metal plates.

Similarly to the both-side friction stir welding of the butted metal plates, in the both-side friction stir welding of lapped metal plates 1 and 2, as shown in Figs. 14 and 15, a friction stir welding is carried out by forming the tip end portion of at least one of the upper and lower rotary tools 3 and 4 with the protruding portion 3d that protrudes from the shoulder surface 3b and forming the tip end portion of the other rotary tools opposed thereto with the recessed portion 4d that receives the receives at least the tip end of the protruding portion 3d, and moving the rotary tools 3 and 4 along the joint portion J under the state that at least the tip end of the protruding portion 3d of one of the rotary tools is inserted into the recessed portion 4d of the other rotary tool, thereby performing friction stir welding and joining the metal plates 1 and 2.

When the present invention is applied to the lap welding, the gripping of the metal plates 1 and 2 by the inlet and outlet gripping devices 5 and 6 comprises two cases in which one is to grip the two lapped metal plates 1 and 2 together and the other is to grip individually the metal plates 1 and 2 respectively.

Fig. 14 shows the former case, in which a lap portion of the two metal plates is relatively long, and the inlet and outlet gripping devices 5 and 6 grip the metal plates 1 and 2 together in the both sides of the lap portion forming a joint portion. Fig. 15 shows the latter case, in which the inlet and outlet gripping devices 5 and 6 grips the metal plates 1 and 2 individually in the both sides of the lap portion forming a joint portion.

In the example of Fig. 15, it is difficult to enhance a degree of intimate contact state in the lap portion during welding. In addition, since heights at which the inlet and outlet gripping devices 5 and 6 are positioned do not become the same, a height-adjusting mechanism is required. In this sense, the example of Fig. 14 is considered to be preferable.

As described above, by performing the welding method according to the present invention using the welding apparatus shown in Figs. 9 to 12, it is possible to prolong the service life of the rotary tools and improve economy and to suppress joint defect and rupturing of materials and to join the metal plates with high reliability.

Next, further details of the features of the welding method and apparatus according to the present embodiment are described below.

First, inclinations of the axes of the upper and lower rotary tools 3 and 4 are described below.

Fig. 16 is a cross sectional view taken along the welding direction (perpendicular to a line along the cross section shown in Fig. 1) and shows the case in which the friction stir welding is performed while the rotary tools 3 and 4 rotate.

In the present embodiment, the friction stir welding is performed while the upper and lower rotary tools 3 and 4 rotate under the state that the axes 15 of the rotary tools 3 and 4 are inclined in the direction that the respective probes 13a and 13b move ahead in the direction of movement of the rotary tools 3 and 4.

The diameter d2 of the recessed portion 4d of the lower rotary tool 4 is set on the basis of the diameter d1, length L1 and inclination angle θ1 of the protruding portion 3d of the upper rotary tool 3 so that the upper and lower rotary tools 3 and 4 do not interfere with each other.

Since the axes 15 of the rotary tools 3 and 4 are inclined in the aforementioned manner, the pressure of the shoulder surfaces 3b and 4b of the rotary tools 3 and 4 against the materials can be increased, and the flowability of the joint portion by the friction stir welding can be improved and thus it is possible to suppress occurrence of a join defect.

In addition, the materials softened by friction stir flows into the recessed portion 4d of the lower rotary tool 4 to fill a gap that is present in the recessed portion 4d of the lower rotary tool 4. Thus, since the protruding portion 3d of the first rotary tool 3 inserted in the recessed portion 4d of the second rotary tool 4 receives inner pressure through the softened materials filled in the gap, a vibration damping force acts and the performance of vibration damping for the first and second rotary tools 3 and 4 in the radial direction is improved. As a result, chattering is suppressed and it is possible to realize a uniform friction stir, and thus also in this point, it is possible to suppress joint defect and join the metal plates with high reliability.

Here, if the tool axes 15 are inclined too much in angle, this increases an insertion depth in the metal plates 1 and 2 in a trailing side of the shoulder surfaces of the rotary tools in the traveling direction. This increase, in turn, releases volumes of joint portion material of the inserted shoulders 3c and 4c from beads, partially thinning down the plate thickness at the joint portion, and thus reducing the strength of the plates at the joint portion. In particular, if the metal plates 1 and 2 to be joined are as thin as 2 mm or less, thickness of the plates at the joint portion decreases at a high rate and the rupture of the plate begins at the joint portion.

When the plate thickness of the metal plates 1 and 2 is 2 mm or less, therefore, by controlling the inclination angle θ1 or θ2 to exceed 0°, but not greater than 3°, a decrease in the strength of the plates at the joint portion due to a partial decrease in the thickness of the plates is suppressed, and hence the plate rupture at the joint portion is suppressed. Further, to suppress the local decrease in the thickness of the plates at the joint portion, the inclination angle θ1 or θ2 is preferably controlled to exceed 0°, but not greater than 2°, and more preferably controlled to exceed 0°, but not greater than 1°.

Next, the rotational directions of the upper and lower rotary tools 3 and 4 are described.

Figs. 17 and 18 show friction stir welding under states that the upper and lower rotary tools 3 and 4 are rotated in the same direction, that the shoulders 3d and 4d (shoulder surfaces 3b and 4b) of the rotary tools 3 and 4 are of the same diameter, and that the axes of the rotary tools 3 and 4 are inclined at the same angle with respect to the traveling direction of the tool. Fig. 17 is a perspective view, and Fig. 18 is a sectional view.

As shown in Figs. 17 and 18, when the upper and lower rotary tools 3 and 4 are rotated in the same direction, the upper shearing force 27a and the lower shearing force 27b work in the same direction upon the softened section in the front and back surfaces of each metal plate that is sandwiched between the tool shoulders 3c and 4c. Therefore, when the metal plates 1 and 2 are too thin, a shearing force exceeding an allowable level may act to rupture the material.

Figs. 19 and 20 show friction stir welding under states that the upper and lower rotary tools 3 and 4 are rotated in opposite directions, that the shoulders 3c and 4c (shoulder surfaces 3b and 4b) of the rotary tools 3 and 4 are of the same diameter, and that the axes of the rotary tools 3 and 4 are inclined at the same angle with respect to the traveling direction of the tool. Fig. 19 is a perspective view, and Fig. 20 is a sectional view.

In the present embodiment, as shown in Figs. 19 and 20, the upper and lower rotary tools 3 and 4 are rotated in opposite directions in the front surface side and the back surface side. Thus, the shearing force 27a due to stirring from the front surface side and the shearing force 27b due to stirring from the front surface side are canceled out within the interior of the joint portion, thereby preventing the material from rupturing. In addition, the gripping forces of the gripping devices 5 and 6 are reduced and thus the gripping devices are simplified.

Further, the control device 83 supplies commands to the upper rotation motor 53a and the lower rotation motor 53b to control the rotation motors 53a and 53b so that the rotational speeds of the upper and lower rotary tools 3 and 4 becomes equal to each other. Thus, the amount of heat that is transferred into the joint portion from the front surface is equal to that from the back surface. In addition, the shearing forces that are caused by frictional forces are equal to each other.

Therefore, residual stresses are even in the direction of the thicknesses of the plates, and tensile strength and bending strength are uniform in the front and back surfaces. Thus, a reduction in reliability of the strength can be prevented.

A relationship between the distance between the inlet and outlet gripping devices 5 and 6 and the tool diameter is described below with reference to Figs. 13 to 15.

When the materials forming the metal plates 1 and 2 are low in stiffness, that is, when thicknesses $t_1$ and $t_2$ of the metal plates are smaller than diameters of the shoulders 3c and 4c of the upper and lower rotary tools 3 and 4 and thin or when high-temperature deformation resistance values $\sigma_1$ and $\sigma_2$ are small, it is preferable that a distance Lc between the inlet gripping device 5 and the outlet gripping device 6 is set to be not less than 1.5 times, but not greater than 5.0 times the tool body diameter D1 or D2 of the rotary tool 3 or 4, and as shown in Fig. 13, that the gripping devices grip neighboring portions of the upper and lower rotary tools 3 and 4. Briefly, the inlet and outlet gripping devices 5 and 6 are preferably arranged with respect to the upper and lower rotary tools 3 and 4 so that the following expressions are satisfied:

$$Lc = D3 \ (D4) \ x \ (1.5 \ to \ 5.0)$$

$$Lc = Lc1 + Lc2$$

Lc: Distance between the inlet and outlet gripping devices
Lc1: Distance between the rotary tool axis and the inlet gripping device
Lc2: Distance between the rotary tool axis and the outlet gripping device
D3: Tool body diameter of the upper rotary tool
D4: Tool body diameter of the lower rotary tool

In the present invention, the relationship between the gripping devices distance and the tool diameter is defined as above-mentioned for the following reasons.

If the materials forming the metal plates 1 and 2 are low in stiffness, that is, if the plate thicknesses $t_1$ and $t_2$ of the metal plates are small, or if the high-temperature deformation resistance values $\sigma_1$ and $\sigma_2$ are small, when friction stir welding is carried out while the metal plates 1 and 2 are gripped by the inlet and outlet gripping devices 5 and 6, it is likely to result in buckling of the metal plates 1 and 2 due to the thermal expansion and thermal deformation by friction heat generated during friction stir welding, the exclusion force during passing of the probe or protruding portion, and a shearing force of the material generated by the rotation of the shoulders 3c and 4c. After repeating studies on the above problems, the present inventors obtained the following knowledge:

When thicknesses of metal plates (steel plates) are equal to or not less than 3 mm, if a gripping devices distance Lc is not greater than 125 mm for a tool diameter D of 25 mm (D=D3=D4), the metal plates were able to be welded without buckling. The gripping devices distance Lc in this case is not greater than 5 times the tool diameter D.

In addition, when thicknesses of metal plates (steel plates) are not greater than 3 mm, in case of the distance Lc of 5 times the tool diameter D (=D3=D4), some of the metal plates suffered buckling and were unable to be welded.

It was confirmed, therefore, that when thicknesses of metal plates are not greater than 3 mm, by setting the distance Lc within a range not greater than 5 times the tool diameter D, appropriately, depending on the plate thickness or high-temperature deformation resistance value of the material, the metal plates can be welded without buckling.

For these reasons, by controlling the distance Lc between the inlet gripping device 5 and the outlet gripping device 6 to be not greater than 5 times the tool diameter D, the metal plates 1 and 2 can be welded without buckling due to the thermal expansion and thermal deformation by frictional heat generated during friction stir welding, the exclusion force during passing of the probe or protruding portion and the shearing force of the material generated by the rotation of the shoulders 3c and 4c.

Additionally, it is more preferable that when plate thicknesses are not greater than 3 mm, the distance Lc between the inlet gripping device 5 and outlet gripping device 6 is set to be not less than 1.5 times, but not greater than 3 times the tool body diameter D, and even more preferably, set to be not less than 1.5 times, but not greater than 2 times the diameter.

Meanwhile, during friction stirring with the rotary tools 3 and 4, it is unavoidable for the rotary tools 3 and 4 to generate very insignificant vibration due to a change in a load at the joint portion, clearances in movable portions, etc. Additionally, bringing the inlet gripping device 5 and the outlet gripping device 6 too close to the rotary tools 3 and 4 is liable to cause interference (contact) therebetween. By setting the distance Lc between the inlet gripping device 5 and the outlet gripping device 6 to be not less than 1.5 times the tool diameter D, interference between the rotary tools 3 and 4 and the inlet and outlet gripping devices 5 and 6 is preventing from occurring even when the rotary tools 3 and 4 generate very insignificant vibration, thereby improving the apparatus life.

For the above reasons, by setting the distance Lc between the inlet gripping device 5 and outlet gripping device 6 to be not less than 1.5 times, but not greater than 5.0 times the rotary tool diameter and gripping the front and back surfaces of both metal plates 1 and 2 in the vicinity of the tool shoulders with the gripping devices 5 and 6, even when the materials are thin and low in stiffness, buckling of the metal plates due to the thermal expansion and thermal deformation by frictional heat generated during friction stir welding, the exclusion force during passing of the probe or protruding portion and the shearing force of the material generated by the rotation of the shoulders is suppressed while maintaining butting accuracy of the metal plates 1 and 2 at a high level and stable welding is implemented.

Next, plunging-less is described.

In the conventional one-side friction stir welding, before start of friction stirring, the operation called "plunging" is required. In the plunging operation, the insertion positions of the rotary tools are maintained until, by rotating the rotary tools under the state that the tool shoulder surfaces of the rotary tools are brought in contact with the surfaces of the metal plates 1 and 2, the frictional heat generated between the shoulder surfaces of the rotary tools and the surfaces of metal plates 1 and 2, the temperatures of the metal plate materials are increased to nearly 80% of the melting points at which the materials are softened. After the metal plates 1 and 2 are softened, the rotary tools are moved in the welding direction while the friction stir depth is fixed or the load of the tool rotation motors of the friction stirring device is controlled to be constant whereby friction stir welding is performed. Since the plunging is time-consuming, the welding cycle is correspondingly prolonged, and this restricts enhancement of production efficiency.

When the both-side friction stir welding is performed, since frictional heat is generated in both surfaces of the joint portion, diffusion of heat to a backing metal plate, which occurred in the conventional one-side friction stir welding, does not occur and temperature elevation is achieved at a short time. Focusing attention to the findings, the present inventors have considered that it might be possible to omit the plunging process that is performed before start of friction stir welding and friction stir welding is immediately started from edge surfaces of the metal plates 1 and 2 without plunging. As a result, it has been confirmed that the metal plates 1 and 2 render smooth plastic flow by the rotary tools 3 and 4.

More preferably, when the friction stir is performed in advance so that the gap between the probe or the protruding portion 4 of the upper rotary tool 3 and the recessed portion 4d of the lower rotary tool 4 is filled with the same material as the metal plates, it is possible to suppress a vibration due to an initial eccentric load as described above.

In the welding method of the present invention, therefore, plunging-less friction stir welding that does not involve the plunging step can be implemented, which in turn allows the welding cycle time to be reduced and production efficiency to be enhanced.

Next, the plunging-less and the inclinations of the axes of the upper and lower rotary tools 3 and 4 are described.

Fig. 21 is an explanatory diagram showing the case in which the upper and lower rotary tools 3 and 4 are inserted from an edge surface of the joint portion under the state that the inclination angles of the upper and lower rotary tools 3 and 4 are set to 0 degrees (or the tools are not inclined). In order to start the friction stir welding with plunging-less, insertion positions of the upper and lower rotary tools 3 and 4 when the rotary tools 3 and 4 are inserted from the edge surface 24 of the joint portion are determined on the basis of the relative positions of the joint portion J and rotary tools 3 and 4. As shown in Fig. 21, when the insertion positions of the upper and lower rotary tools 3 and 4 are slightly shifted and the upper and lower rotary tools 3 and 4 are excessively inserted, there is a possibility that the side surfaces of the rotary tools 3 and 4 are forced to press the edge surface 24 of the joint portion J and a trouble such as buckling of the metal plates 1 and 2 and a friction stirring defect may occur.

Fig. 22 shows the state in which the upper and lower rotary tools 3 and 4 are inserted from the edge surface 24 of the joint portion J under the state that the upper and lower rotary tools 3 and 4 are appropriately inclined. In order to smoothly insert the upper and lower rotary tools 3 and 4 from the edge surface 24 of the joint portion J, stirring is performed under the state that the axes 14 of the tools are inclined in the direction that the probes 13a and 13b at tip end portions of the upper and lower rotary tools 3 and 4 move ahead of the other portions of the rotary tools with respect to the traveling direction of the tools as shown in Fig. 22. The inclination angles $\theta 1$ and $\theta 2$ at this time are preferably set to be greater than 0°, but not greater than 10°, more preferably greater than 0°, but not greater than 6°, and further preferably greater than 0°, but not greater than 3°.

With such setting, since the rotary tools 3 and 4 becomes engaged with the edge surface 24 from the shoulder surfaces, the side surfaces of the tools do not press the edge surface 24. Therefore, the friction stir welding can be smoothly started with plunging-less while a trouble such as metal plate buckling and friction stirring defect does not occur. After that, in the friction stir welding process, since the axes of the upper and lower rotary tools 3 and 4 are inclined, the surface pressures between the shoulders of the rotary tools 3 and 4 and the materials is increased, and occurrence of burrs and welding defects during friction stir welding can be suppressed.

Next, a method of operating the apparatus for carrying out both-side friction stir welding with plunging-less is described below.

A control system associated with the operating method is first described.

As shown in Figs. 10 and 11, the welding apparatus according to the present embodiment includes: an upper position measuring device 81a mounted on a lower surface of the upper body casing 51; an upper load measuring device (load cell) 82a mounted between the cylindrical body 53 of the upper tool rotation device 7 and the support frame 63a; a lower position measuring device 81b mounted on an upper surface of the lower body casing 52; a lower load measuring device (load cell) 82b mounted between the cylindrical body 54 of the lower tool rotation device 8 and the support frame 63b (not shown) for the lower tool rotation device 8; and a control device 83. The control device 83 receives data measured by the upper and lower position measuring devices 81a, 81b and the upper and lower load measuring devices 82a, 82b, and conducts predetermined arithmetic processing. The control device 83 then transmits command signals to the rotation motors 53a, 53b of the upper and lower tool rotation devices 7, 8, the pressing motors 61a, 61b of the upper and lower tool pressing devices 45, 46, and the traveling motors 67a, 67b of the upper and lower moving devices 47, 48 to control operations of the upper and lower tool rotation devices 7, 8, the upper and lower tool pressing devices 45, 46 and the upper and lower moving devices 47, 48. By way of example, in Fig. 10, the upper and lower position measuring devices 81a, 81b are of noncontact type, but may be of contact type. In addition, when the upper and lower inclining support devices 76a, 76b are of angle adjustable type, the control device 83 transmits command signals to the angle control motors 77a and 77b of the inclining support devices 76a, 76b on the basis of preset data to incline the axes 15 of the upper and lower rotary tools 3, 4 and support the tools at a predetermined angle.

Fig. 23 shows the operating method for performing the both-side friction stir welding with plunging-less while the axes 15 of the rotary tools 3, 4 are inclined. Fig. 24 is a control flow of procedure of a process performed by the control device 83 shown in Fig. 11.

As shown in Figs. 23 and 24, before start of friction stir welding, the upper and lower tool rotation devices 7 and 8 are positioned at standby positions 20a and 20b, respectively. At the standby positions 20a and 20b, the axes of the upper and lower the rotary tools 3 and 4 are inclined. In addition, the upper and lower position measuring devices 81a and 81b (see Figs. 10 and 11) that are mounted on the upper and lower body casings 51 and 52 are used to measure distances between the joint portion J and the upper and lower tool rotation devices 7 and 8, and compute a planned insertion depth of the rotary tools 3 and 4 (step S1). Next, the upper and lower pressing motors 61a and 61b are driven to move the upper and lower rotary tools 3 and 4 to the planned insertion depth by position control (step S2). At this time, the shoulder surfaces 3b and 4b of the upper and lower rotary tools 3 and 4 are set to a predetermined rage (e.g., the plate thickness t) on the basis of the values measured by the position measuring devices 81a and 81b. Then, under the state that the insertion positions of the tools are maintained by position control, the upper and lower traveling motors 67a and 67b are driven to move the upper and lower tool rotation devices 7 and 8 in the welding direction (step S2) and friction stir welding is started from friction stir starting positions 21a and 21b at the edge surface 24 of the joint portion. At this time, as described above, the friction stir welding is started with plunging-less by inserting the rotary tools 3 and 4 into the metal plates from the edge surface 24 into the metal plates while pressing the shoulder surfaces of the tools 3, 4 against the edge surface 24 as the position control is maintained (see Fig. 23, etc.).

After start of friction stir welding, a constant load control is carried out to control the insertion position of the upper rotary tool 3 so that the load applied to the upper rotation motor 53a is maintained at a predetermined value on the basis of a control current of the motor 53a for the upper rotary tool 3 (step S3), and before the tools reach positions 22a and 22b at which friction stir welding finishes, the control is switched to constant position control to maintain the insertion positions of the tools that are positioned at that time (step S3 to step S4) and further to control the tools to pass through the friction stir finishing positions 22a and 22b. As for the lower rotary tool 4, even after start of friction stir welding, position control is maintained and the tool 4 is allowed to pass through the friction stir finishing positions 22a and 22b while the position control is maintained (step S3 to step S4).

In this way, by maintaining the position control for the lower rotary tool 4 and switching the control for the upper rotary tool 3 to constant load control after start of friction stir welding, stable friction stirring can be realized even when the thickness of the joint portion J varies.

In addition, since the loads applied to the upper and lower rotary tools 3 and 4 are kept constant, wear and damage of the tools 3 and 4 can be suppressed, hence increasing the tool life.

The above control in each step is carried out by the control device 83 that receives the value measured by the upper and lower position measuring devices 81a, 81b and then, on the basis of the measured values and the control currents of the upper and lower rotation motors 53a, 53b, provides operating commands to various actuators such as the upper and lower rotation motors 53a, 53b, the upper and lower pressing motors 61a, 61b and the upper and lower traveling motors 67a, 67b.

Although in the above operating method, the constant load control of the upper rotary tool 3 is carried out by using the control current of the rotation motor 53a, the values measured by the load measuring devices 82a, 82b may be used instead. Additionally, although the position control of the upper and lower rotary tools 3 and 4 is carried out by using the values measured by the upper and lower position measuring devices 81a, 81b, rotation sensors such as encoders that detect the rotational amounts of the upper and lower pressing motors 61a, 61b may be used instead.

Fig. 25 is a control flow showing another example of procedures of a process performed by the control device 83. In this example, in the range from the friction stir starting positions 21a and 21b in Fig. 23 to the friction stir finishing positions 22a and 22b, not only the upper rotary tool 3 is subjected to constant load control, but both of the upper and lower rotary tools 3 and 4 are subjected to constant load control (step S3A). In Fig. 23, this example is supplementarily described in parentheses in the range from the friction stir starting positions 21a, 21b to the friction stir finishing positions 22a, 22b.

In the method of controlling the upper and lower rotary tools 3 and 4, when the lower rotary tool 4 is placed under constant position control after start of friction stir welding as well, the back surfaces of the metal plates serves as a reference surface. In this case, if the reference surface is not uniform due to deformation of the metal plates or the like, when the materials are thin (or low in stiffness) and low in deformation resistance, it is possible to nearly match the upper and lower friction stirring ranges by the pressing force from the upper rotary tool 3 against the metal plate generated by constant load control of the tool 3 only. However, it has been confirmed by the present inventors that when the material is thick (or high in stiffness) and high in deformation resistance, it is occasionally difficult to match the friction stirring ranges of the front and back surfaces of the metal plates by the pressing force from the upper rotary tool 3 against the metal plate generated by constant load control of the tool 3 only.

When the friction stirring ranges are different between the front and back surfaces of the metal plates, residual stresses are unbalanced in the direction of the thicknesses of the plates, so that differences in tensile strength and bending strength between the front and back surfaces are generated, and this may a factor that reduces strength reliability.

Additionally, when one of the rotary tools is subjected to position control, owing the unbalanced pressing forces against the front and back surfaces, forces due to the pressing forces are applied to the gripping devices 5 and 6 that grip the metal plates. Therefore, in addition to the gripping forces of the metal plates, the forces applied to the gripping devices 5 and 6 by the unbalanced pressing forces against the front and back surfaces is necessary to be maintained, so that there is a possibility that the gripping devices 5 and 6 need to be large.

To avoid these problems, when the metal plates are thick or high in stiffness, as described in parentheses shown in Fig. 23 and in step S3A of the control flow in Fig. 25, the lower rotary tool 4 is also placed under rotation motor constant load control after start of the friction stir welding, so that the upper and lower rotary tools 3 and 4 are both subjected to constant load control. Thus, the amounts and ranges of heat input from the front and back surfaces of the metal plates become the same, thereby enabling the residual stresses in the front and back surfaces to be uniform and to prevent the metal plate from warping.

On the other hand, when the metal plates are sufficiently thin or low in stiffness, the upper and lower rotary tools 3 and 4 may be subjected to position control at all times including the time period of friction stir welding.

| 1, 2 | Metal plates |
| 3 | First rotary tool (upper rotary tool) |
| 3a | Tool body |
| 3b | Shoulder portion |
| 3c | Shoulder surface |
| 3d | Protruding portion (probe) |
| 4 | Second rotary tool (lower rotary tool) |
| 4a | Tool body |
| 4b | Shoulder portion |
| 4c | Shoulder surface |
| 4d | Recessed portion |
| 5 | Inlet gripping device |
| 5a, 5b | Upper and lower gripping plates |
| 6 | Outlet gripping device |
| 6a, 6b | Upper and lower gripping plates |
| 7 | Upper tool rotation device |

| 8 | Lower tool rotation device |
| 9 | Upper housing |
| 10 | Lower housing |
| 11 | Upper rail |
| 12 | Lower rail |
| 15 | Tool axis |
| 20a | Upper rotary tool standby position |
| 20b | Lower rotary tool standby position |
| 21a | Upper friction stir welding starting position |
| 21b | Lower friction stir welding starting position |
| 22a | Upper friction stir welding finishing position |
| 22b | Lower friction stir welding finishing position |
| 24 | Metal plate edge surface at which friction stir starts |
| 27a | Upper shearing force |
| 27b | Lower shearing force |
| 45 | Upper tool pressing device |
| 46 | Lower tool pressing device |
| 47 | Upper moving device |
| 48 | Lower moving device |
| 49 | Upper cylindrical body |
| 50 | Lower cylindrical body |
| 51 | Upper body casing |
| 52 | Lower body casing |
| 53a | Upper rotation motor |
| 53b | Lower rotation motor |
| 61a, 61b | Press motor |
| 62a, 62b | Screw |
| 63a, 63b | Support frame |
| 64a, 64b | Axis |
| 65a, 65b | Travel frame |
| 66a, 66b | Wheel |
| 67a, 67b | Travel motor |
| 71 | Wheel |
| 72 | Screw |
| 73 | Travel motor |
| 74 | Traveling device |
| 75 | Control device |
| 76a | Upper inclination supporting device |
| 76b | Lower inclination supporting device |
| 77a, 77b | Angle adjustment motor |
| 81a | Upper position measuring device |
| 81b | Lower position measuring device |
| 82a | Upper load measuring device |
| 82b | Lower load measuring device |
| 83 | Control device |
| J | Joint portion |
| $\theta 1$, $\theta 2$ | Inclination angle |

**Claims**

1.  A both-side friction stir welding method in which first and second rotary tools (3, 4) are arranged in opposed relationship in the front and back surface sides of a joint portion (J) of two metal plates (1, 2) to be joined, and the joint portion is frictionally stirred by the rotary tools (3, 4) to perform friction stir welding and join the two metal plates, wherein:

    one (3) of the first and second rotary tools (3, 4) includes a tool body (3a) having a shoulder portion (3c) formed at a tip end portion thereof and at least one protruding portion (3d) formed to protrude from the tip end portion of the tool body, **characterized in that**
the other (4) of the first and second rotary tools (3, 4) includes a tool body (4a) having a shoulder portion (4c) formed at the tip end portion thereof and at least one recessed portion (4d) formed at the tip end portion of the other tool body,
wherein the recessed portion (4d) is formed to receive the tip end of the protruding portion (3d) therein when the two metal plates (1, 2) are to be welded; the method being further **characterized by** the steps of:

arranging the first and second rotary tools in opposed relationship in the front and back surface sides of the joint portion (J) of the two metal plates; rotating the first and second rotary tools; and moving the first and second rotary tools in a direction to approach to each other so as to insert the tip end of the protruding portion (3d) of the first rotary tool into the recessed portion (4d) of the second rotary tool while pressing shoulder surfaces (3b, 4b) of the shoulder portions of the first and second rotary tools against the front and back surfaces of the joint portion; and
moving, under the state that the tip end of the protruding portion (3d) of the first rotary tool is inserted into the recessed portion (4d) of the second rotary tool and the shoulder surfaces (3b, 4b) of the shoulder portions of the first and second rotary tools are pressed against the front and back surfaces of the joint portion, the first and second rotary tools along the joint portion thereby to frictionally stir the joint portion in the entire region in the thickness direction of the joint portion.

2. The both-side friction stir welding method according to Claim 1, wherein
materials of the first and second rotary tools (3, 4) are cemented carbide alloy of sintered tungsten carbide or a tungsten alloy, and the two metal plates welded together by the first and second rotary tools are made of a material having a melting point of 1,000°C or more.

3. The both-side friction stir welding method according to Claim 1 or 2, wherein
the axes of the first and second rotary tools are inclined such that the tip end portions of the first and second rotary tolls move ahead in a direction of movement of the first and second rotary tools relative to the joint portion (J).

4. The both-side friction stir welding method according to any one of Claims 1 to 3, wherein
the first and second rotary tools (3, 4) arranged in opposed relationship are rotated in opposite directions in the front and back surface sides of the joint portion (J) of the two metal plates (1, 2).

5. The both-side friction stir welding method according to any of Claims 1 to 4, wherein
at least one (3) of the first and second rotary tools (3, 4) is moved to a planned insertion depth by position control moved in a thickness direction of the metal plates (1, 2) before start of friction stir welding; then, the rotary tool is moved by position control in a welding progress direction from an edge surface (24) of the joint portion of the two metal plates with the insertion depth of the rotary tool (3) being maintained to start the friction stir welding; after the start of the friction stir welding, the position control is switched to constant load control to control the insertion position of the rotary tool such that a load applied to the rotary tool (3) is maintained at a predetermined value; and then, before the rotary tool reaches a welding terminating end of the joint portion at which the friction stir welding terminates, the constant load control is switched to position control to maintain the insertion position of the rotary tool (3) at that time and the rotary tool passes through the welding terminating end of the joint portion.

6. A both-side friction stir welding apparatus in which first and second rotary tools (3, 4) are arranged in opposed relationship in the front and back surface sides of a joint portion (J) of two metal plates (1, 2) to be joined, and the joint portion is frictionally stirred by the rotary tools (3, 4) to perform friction stir welding and join the two metal plates, the apparatus comprising:

tool rotation devices (7, 8) having the first and second rotary tools (3, 4) attached thereto in opposed relationship in the front and back surface sides of the joint portion (J) of the two metal plates (1, 2), for rotating the first and second rotary tools (3, 4);
tool pressing devices (45, 46) for moving the first and second rotary tools (3, 4) attached to the tool rotation devices (7, 8) in a direction to approach to each other to press the first and second rotary tools (3, 4) against the front and back surfaces of the joint portion of the metal plates; and
moving devices (47, 48) for moving the first and second rotary tools (3, 4) attached to the tool rotation devices (7, 8) along the joint portion; wherein:

the first rotary tool (3) includes a tool body (3a) having a shoulder portion (3c) formed at a tip end portion thereof and at least one protruding portion (3d) formed to protrude from the tip end portion of the tool body, **characterized in that**

the second rotary tool (4) includes a tool body (4a) having a shoulder portion (4c) formed at a tip end portion thereof and at least one recessed portion (4d) formed at the tip end portion of the tool body, wherein the recessed portion (4d) is formed for receiving the tip end of the protruding portion (3d) therein when the two metal plates (1, 2) are to be welded, and

a control device (83) is configured to control the tool pressing devices (45, 46) to insert the tip end of the protruding portion (3d) of the first rotary tool (3) into the recessed portion (4d) of the second rotary tool (4) and press shoulder surfaces (3b, 4b) of the shoulder portions of the first and second rotary tools (3, 4) against the front and back surfaces of the joint portion (J) when the tool pressing devices (45, 46) move the first and second rotary tools (3, 4) attached to the tool rotation devices (7, 8) in the direction to approach to each other, and

the control device (83) is configured to control the moving devices (47, 48) to move the first and second rotary tools (3, 4) along the joint portion under the state that the tip end of the protruding portion (3d) of the first rotary tool (3) is inserted into the recessed portion (4d) of the second rotary tool (4) and the shoulder surfaces (3b, 4b) of the shoulder portions of the first and second rotary tools (3, 4) are pressed against the front and back surfaces of the joint portion (J) thereby to frictionally stir the joint portion (J) in the entire region in the thickness direction of the joint portion (J).

7. The both-side friction stir welding apparatus according to Claim 6, further comprising:
inclination supporting devices (76a, 76b) for supporting the first and second rotary tools (3, 4) to incline the axes of the first and second rotary tools such that the tip end portions of the first and second rotary tolls move ahead in a direction of movement of the first and second rotary tools relative to the joint portion (J).

8. The both-side friction stir welding apparatus according to Claim 6 or 7, wherein
the tool rotation devices (7, 8) is configured to rotate the first and second rotary tools (3, 4) in opposite directions in the front and back surface sides of the joint portion (J).

9. The both-side friction stir welding apparatus according to any one of Claim 6 to 8, wherein the control device (83) is configured to control the tool pressing devices (45, 46) and the moving devices (47, 48) such that:
at least one (3) of the first and second rotary tools (3, 4) attached to the tool rotation devices (7, 8) is moved to a planned insertion depth by position control in the direction of thickness of the metal plates (1, 2) before start of friction stir welding; then, the rotary tool is moved by position control in a welding progress direction from an edge surface (24) of the joint portion of the two metal plates with the insertion depth of the rotary tool (3) being maintained to start the friction stir welding; after the start of the friction stir welding, the position control is switched to constant load control to control the insertion position of the rotary tool such that a load applied to the rotary tool (3) is maintained at a predetermined value; and then, before the rotary tool reaches a welding terminating end of the joint portion at which the friction stir welding terminates, the constant load control is switched to position control to maintain the insertion position of the rotary tool (3) at that time and the rotary tool passes through the welding terminating end of the joint portion.

## Patentansprüche

1. Beidseitiges Reibrührschweißverfahren, bei dem erste und zweite Drehwerkzeuge (3, 4) in gegenüberliegender Beziehung an den Vorder- und Rückflächenseiten eines Verbindungsabschnitts (J) von zwei zu verbindenden Metallplatten (1, 2) angeordnet werden und der Verbindungsabschnitt durch die Drehwerkzeuge (3, 4) reibgerührt wird, um Reibrührschweißen durchzuführen und die beiden Metallplatten zu verbinden, wobei:

eines (3) unter dem ersten und dem zweiten Drehwerkzeug (3, 4) einen Werkzeugkörper (3a) mit einem an seinem Spitzenendabschnitt ausgebildeten Schulterabschnitt (3c) und mindestens einem vorstehenden Abschnitt (3d) aufweist, der ausgebildet ist, um von dem Spitzenendabschnitt des Werkzeugkörpers vorzustehen, **dadurch gekennzeichnet, dass**

das andere (4) unter dem ersten und dem zweiten Drehwerkzeug (3, 4) einen Werkzeugkörper (4a) mit einem an seinem Spitzenendabschnitt ausgebildeten Schulterabschnitt (4c) und mindestens einem an dem Spitzenendabschnitt des anderen Werkzeugkörpers ausgebildeten Aussparungsabschnitt (4d) aufweist, wobei der Aussparungsabschnitt (4d) ausgebildet ist, um das Spitzenende des vorstehenden Abschnitts (3d) darin aufzunehmen, wenn die beiden Metallplatten (1, 2) geschweißt werden sollen;

wobei das Verfahren ferner **gekennzeichnet ist durch** die Schritte:

Anordnen des ersten und des zweiten Drehwerkzeugs in gegenüberliegender Beziehung an der Vorder- und der Rückflächenseite des Verbindungsabschnitts (J) der beiden Metallplatten; Drehen des ersten und des zweiten Drehwerkzeugs; und Bewegen des ersten und des zweiten Drehwerkzeugs in einer Richtung, in der sie sich einander annähern, um so das Spitzenende des vorstehenden Abschnitts (3d) des ersten Drehwerkzeugs in den Aussparungsabschnitt (4d) des zweiten Drehwerkzeugs einzuführen, während Schulterflächen (3b, 4b) der Schulterabschnitte des ersten und des zweiten Drehwerkzeugs gegen die Vorder- und die Rückfläche des Verbindungsabschnitts gedrückt werden; und

Bewegen, in dem Zustand, in dem das Spitzenende des vorstehenden Abschnitts (3d) des ersten Drehwerkzeugs in den Aussparungsabschnitt (4d) des zweiten Drehwerkzeugs eingeführt ist und die Schulterflächen (3b, 4b) der Schulterabschnitte des ersten und zweiten Drehwerkzeugs gegen die Vorder- und Rückflächen des Verbindungsabschnitts gedrückt sind, des ersten und des zweiten Drehwerkzeugs entlang des Verbindungsabschnitts, um dadurch den Verbindungsabschnitt im gesamten Bereich in der Dickenrichtung des Verbindungsabschnitts zu reibrühren.

2.  Beidseitiges Reibrührschweißverfahren nach Anspruch 1, bei dem die
    die Werkstoffe des ersten und zweiten Drehwerkzeugs (3, 4) aus einer Sinterkarbidlegierung aus gesintertem Wolframkarbid oder einer Wolframlegierung bestehen und die beiden Metallplatten, die durch das erste und zweite Drehwerkzeug zusammengeschweißt werden, aus einem Material mit einem Schmelzpunkt von 1000°C oder mehr bestehen.

3.  Beidseitiges Reibrührschweißverfahren nach Anspruch 1 oder 2, bei dem
    die Achsen des ersten und des zweiten Drehwerkzeugs so geneigt sind, dass die Spitzenendabschnitte des ersten und des zweiten Drehwerkzeugs sich in einer Bewegungsrichtung des ersten und zweiten Drehwerkzeugs relativ zum Verbindungsabschnitt (J) vorwärts bewegen.

4.  Beidseitiges Reibrührschweißverfahren nach einem der Ansprüche 1 bis 3, bei dem
    das erste und das zweite Drehwerkzeug (3, 4), die in gegenüberliegender Beziehung angeordnet sind, an den Vorder- und Rückflächenseiten des Verbindungsabschnitts (J) der beiden Metallplatten (1, 2) in entgegengesetzten Richtungen gedreht werden.

5.  Beidseitiges Reibrührschweißverfahren nach einem der Ansprüche 1 bis 4, bei dem
    wenigstens eines (3) unter dem ersten und dem zweiten Drehwerkzeug (3, 4) vor Beginn des Reibrührschweißens durch eine Positionssteuerung, die in einer Dickenrichtung der Metallplatten (1, 2) bewegt wird, auf eine geplante Einführtiefe bewegt wird; dass dann das Drehwerkzeug durch Positionssteuerung unter Beibehaltung der Einführtiefe des Drehwerkzeugs (3) in einer Schweißfortschrittsrichtung von einer Kantenfläche (24) des Verbindungsabschnitts der beiden Metallplatten bewegt wird, um das Reibrührschweißen zu beginnen; dass nach dem Beginn des Reibrührschweißens die Positionssteuerung auf eine Konstantlaststeuerung umgeschaltet wird, um die Einführposition des Drehwerkzeugs so zu steuern, dass eine auf das Drehwerkzeug (3) ausgeübte Last auf einem vorgegebenen Wert gehalten wird; und dass dann, bevor das Drehwerkzeug ein Schweißabschlussende des Verbindungsabschnitts erreicht, an dem das Reibrührschweißen endet, die Konstantlaststeuerung auf eine Positionssteuerung umgeschaltet wird, um die Einführposition des Drehwerkzeugs (3) zu diesem Zeitpunkt beizubehalten, und das Drehwerkzeug das Schweißabschlussende des Verbindungsabschnitts passiert.

6.  Beidseitige Reibrührschweißvorrichtung, bei der ein erstes und ein zweites Drehwerkzeug (3, 4) in gegenüberliegender Beziehung an Vorder- und Rückflächenseiten eines Verbindungsabschnitts (J) von zwei zu verbindenden Metallplatten (1, 2) angeordnet sind, und der Verbindungsabschnitt durch die rotierenden Werkzeuge (3, 4) reibgerührt wird, um das Reibrührschweißen durchzuführen und die beiden Metallplatten zu verbinden, wobei die Vorrichtung umfasst:

    Werkzeugdrehvorrichtungen (7, 8), an denen das erste und das zweite Drehwerkzeug (3, 4) in an der Vorder- und der Rückflächenseite des Verbindungsabschnitts (J) der beiden Metallplatten (1, 2) gegenüberliegender Beziehung befestigt sind, um das erste und das zweite Drehwerkzeug (3, 4) zu drehen;
    Werkzeugandrückvorrichtungen (45, 46) zum Bewegen des ersten und des zweiten Drehwerkzeugs (3, 4), die an den Werkzeugdrehvorrichtungen (7, 8) angebracht sind, in einer Richtung, um sich einander anzunähern, um die ersten und zweiten Drehwerkzeuge (3, 4) gegen die Vorder- und Rückflächenseite des Verbindungsabschnitts der Metallplatten zu drücken; und

Bewegungsvorrichtungen (47, 48) zum Bewegen des ersten und des zweiten Drehwerkzeugs (3, 4), die an den Werkzeugdrehvorrichtungen (7, 8) angebracht sind, entlang des Verbindungsabschnitts; wobei das erste Drehwerkzeug (3) einen Werkzeugkörper (3a) mit einem Schulterabschnitt (3c), der an einem Spitzenendabschnitt desselben ausgebildet ist, und mindestens einen vorstehenden Abschnitt (3d) aufweist, der ausgebildet ist, um von dem Spitzenendabschnitt des Werkzeugkörpers vorzustehen,

**dadurch gekennzeichnet, dass**

das zweite Drehwerkzeug (4) einen Werkzeugkörper (4a) mit einem Schulterabschnitt (4c), der an einem Spitzenendabschnitt desselben ausgebildet ist, und mindestens einem Aussparungsabschnitt (4d), der an dem Spitzenendabschnitt des Werkzeugkörpers ausgebildet ist, aufweist, wobei der Aussparungsabschnitt (4d) ausgebildet ist, um das Spitzenende des hervorstehenden Abschnitts (3d) darin aufzunehmen, wenn die beiden Metallplatten (1, 2) geschweißt werden sollen, und eine Steuervorrichtung (83) konfiguriert ist, um die Werkzeugandrückvorrichtungen (45, 46) zu steuern, um das Spitzenende des vorstehenden Abschnitts (3d) des ersten Drehwerkzeugs (3) in den Aussparungsabschnitt (4d) des zweiten Drehwerkzeugs (4) einzuführen und Schulterflächen (3b, 4b) der Schulterabschnitte des ersten und des zweiten Drehwerkzeugs (3, 4) gegen die Vorder- und die Rückseite des Verbindungsabschnitts (J) zu drücken, wenn die Werkzeugandrückvorrichtungen (45, 46) das erste und das zweite Drehwerkzeug (3, 4), die an den Werkzeugdrehvorrichtungen (7, 8) angebracht sind, in die Richtung bewegen, in der sie sich einander annähern, und die Steuervorrichtung (83) konfiguriert ist, um die Bewegungsvorrichtungen (47, 48) zu steuern, um das erste und zweite Drehwerkzeug (3, 4), in dem Zustand, in dem das Spitzenende des hervorstehenden Abschnitts (3d) des ersten Drehwerkzeugs (3) in den Aussparungsabschnitt (4d) des zweiten Drehwerkzeugs (4) eingeführt ist und die Schulterflächen (3b, 4b) der Schulterabschnitte des ersten und zweiten Drehwerkzeugs (3, 4) gegen die Vorder- und Rückseite des Verbindungsabschnitts (J) gedrückt werden, entlang des Verbindungsabschnitts zu bewegen, um dadurch den Verbindungsabschnitt (J) im gesamten Bereich in Dickenrichtung des Verbindungsabschnitts (J) reibzurühren.

7. Beidseitige Reibrührschweißvorrichtung nach Anspruch 6, ferner umfassend:
Neigungshaltevorrichtungen (76a, 76b) zum Halten des ersten und des zweiten Drehwerkzeuges (3, 4), um die Achsen des ersten und des zweiten Drehwerkzeuges so zu neigen, dass die Spitzenendabschnitte des ersten und des zweiten Drehwerkzeuges sich in einer Bewegungsrichtung des ersten und des zweiten Drehwerkzeuges relativ zum Verbindungsabschnitt (J) vorwärts bewegen.

8. Beidseitige Reibrührschweißvorrichtung nach Anspruch 6 oder 7, bei der
die Werkzeugdrehvorrichtungen (7, 8) konfiguriert sind, um das erste und das zweite Drehwerkzeug (3, 4) an der Vorder- und Rückseite des Verbindungsabschnitts (J) in entgegengesetzten Richtungen zu drehen.

9. Beidseitige Reibrührschweißvorrichtung nach einem der Ansprüche 6 bis 8, wobei die Steuervorrichtung (83) konfiguriert ist, um die Werkzeugandrückvorrichtungen (45, 46) und die Bewegungsvorrichtungen (47, 48) so zu steuern, dass:
mindestens eines (3) unter dem ersten und dem zweiten Drehwerkzeug (3, 4), die an den Werkzeugdrehvorrichtungen (7, 8) angebracht sind, durch Positionssteuerung in Dickenrichtung der Metallplatten (1, 2) vor Beginn des Reibrührschweißens auf eine geplante Einführtiefe bewegt wird; dann das Drehwerkzeug durch Positionssteuerung in einer Schweißfortschrittsrichtung von einer Kantenfläche (24) des Verbindungsabschnitts der beiden Metallplatten bewegt wird, wobei die Einführtiefe des Drehwerkzeugs (3) beibehalten wird, um das Reibrührschweißen zu starten; nach dem Beginn des Reibrührschweißens die Positionssteuerung auf eine Konstantlaststeuerung umgeschaltet wird, um die Einführposition des Drehwerkzeugs so zu steuern, dass eine auf das Drehwerkzeug (3) ausgeübte Last auf einem vorgegebenen Wert gehalten wird; und dann, bevor das Drehwerkzeug ein Schweißbeendigungsende des Verbindungsabschnitts erreicht, an dem das Reibrührschweißen endet, die Konstantlaststeuerung auf eine Positionssteuerung umgeschaltet wird, um die Einführungsposition des Drehwerkzeugs (3) zu diesem Zeitpunkt beizubehalten, und das Drehwerkzeug das Schweißabschlussende des Verbindungsabschnitts passiert.

## Revendications

1. Procédé de soudage par friction-malaxage de deux côtés, dans lequel des premier et second outils rotatifs (3, 4) sont disposés en relation opposée sur les côtés de surface avant et arrière d'une partie de joint (J) de deux plaques métalliques (1, 2) à joindre, et la partie de joint est malaxée par friction par les outils rotatifs (3, 4) pour effectuer un soudage par friction-malaxage et joindre les deux plaques métalliques, dans lequel :

l'un (3) des premier et second outils rotatifs (3, 4) comprend un corps d'outil (3a) ayant une partie d'épaulement (3c) formée à une partie d'extrémité de pointe de celui-ci et au moins une partie saillante (3d) formée pour faire saillie de la partie d'extrémité de pointe du corps d'outil, **caractérisé en ce que**

l'autre (4) des premier et second outils rotatifs (3, 4) comprend un corps d'outil (4a) ayant une partie d'épaulement (4c) formée à la partie d'extrémité de pointe de celui-ci et au moins une partie en creux (4d) formée à la partie d'extrémité de pointe de l'autre corps d'outil,

la partie en creux (4d) étant formée pour recevoir l'extrémité de la partie saillante (3d) lorsque les deux plaques métalliques (1, 2) doivent être soudées ;

le procédé étant en outre **caractérisé par** les étapes consistant à

disposer les premier et second outils rotatifs en relation opposée sur les côtés de surface avant et arrière de la partie de joint (J) des deux plaques métalliques ; faire tourner les premier et second outils rotatifs ; et déplacer les premier et second outils rotatifs dans une direction pour les rapprocher l'un de l'autre de manière à insérer l'extrémité de pointe de la partie saillante (3d) du premier outil rotatif dans la partie en creux (4d) du second outil rotatif tout en pressant les surfaces d'épaulement (3b, 4b) des parties d'épaulement des premier et second outils rotatifs contre les surfaces avant et arrière de la partie de joint ; et

déplacer, à l'état où l'extrémité de la partie saillante (3d) du premier outil rotatif est insérée dans la partie en creux (4d) du deuxième outil rotatif et où les surfaces d'épaulement (3b, 4b) des parties d'épaulement des premier et deuxième outils rotatifs sont pressées contre les surfaces avant et arrière de la partie de joint, les premier et deuxième outils rotatifs le long de la partie de joint pour ainsi malaxer par friction la partie de joint dans toute la région dans le sens de l'épaisseur de la partie de joint.

2. Procédé de soudage par friction-malaxage de deux côtés selon la revendication 1, dans lequel
   les matériaux des premier et deuxième outils rotatifs (3, 4) sont en alliage de carbure cémenté de carbure de tungstène fritté ou alliage de tungstène, et les deux plaques métalliques soudées ensemble par les premier et deuxième outils rotatifs sont en un matériau ayant un point de fusion de 1000°C ou plus.

3. Méthode de soudage par friction-malaxage de deux côtés selon la revendication 1 ou 2, dans laquelle
   les axes des premier et deuxième outils rotatifs sont inclinés de telle sorte que les parties d'extrémité de pointe des premier et deuxième outils rotatifs avancent dans une direction de mouvement des premier et deuxième outils rotatifs par rapport à la partie de joint (J).

4. Procédé de soudage par friction-malaxage de deux côtés selon l'une quelconque des revendications 1 à 3, dans lequel
   les premier et deuxième outils rotatifs (3, 4) disposés en relation opposée sont tournés dans des directions opposées sur les faces avant et arrière de la partie de joint (J) des deux plaques métalliques (1, 2).

5. Procédé de soudage par friction-malaxage de deux côtés selon l'une des revendications 1 à 4, dans lequel
   au moins un (3) des premier et deuxième outils rotatifs (3, 4) est déplacé à une profondeur d'insertion prévue par un contrôle de position déplacé dans le sens de l'épaisseur des plaques métalliques (1, 2) avant le début du soudage par friction-malaxage ; ensuite, l'outil rotatif est déplacé par un contrôle de position dans le sens de progression du soudage à partir d'une surface de bord (24) de la partie de joint des deux plaques métalliques, la profondeur d'insertion de l'outil rotatif (3) étant maintenue pour commencer le soudage par friction-malaxage ; après le début du soudage par friction-malaxage, la commande de position étant commutée en commande de charge constante pour contrôler la position d'insertion de l'outil rotatif de telle sorte qu'une charge appliquée à l'outil rotatif (3) soit maintenue à une valeur prédéterminée ; et ensuite, avant que l'outil rotatif n'atteigne une extrémité de fin de soudage de la partie de joint à laquelle le soudage par friction-malaxage se termine, la commande de charge constante est commutée en commande de position pour maintenir la position d'insertion de l'outil rotatif (3) à ce moment-là, et l'outil rotatif passe à travers l'extrémité de fin de soudage de la partie de joint.

6. Dispositif de soudage par friction-malaxage de deux côtés dans lequel des premier et second outils rotatifs (3, 4) sont disposés en relation opposée sur les côtés de surface avant et arrière d'une partie de joint (J) de deux plaques métalliques (1, 2) à joindre,
   et la partie de joint est malaxée par friction par les outils rotatifs (3, 4) pour effectuer le soudage par friction-malaxage et joindre les deux plaques métalliques, l'appareil comprenant :

   des dispositifs de rotation des outils (7, 8) auxquels sont fixés les premier et second outils rotatifs (3, 4) en relation opposée sur les côtés de surface avant et arrière de la partie de joint (J) des deux plaques métalliques (1, 2), pour faire tourner les premier et second outils rotatifs (3, 4) ;

des dispositifs de pressage d'outil (45, 46) pour déplacer les premier et deuxième outils rotatifs (3, 4) fixés aux dispositifs de rotation d'outil (7, 8) dans une direction pour se rapprocher l'un de l'autre afin de presser les premier et deuxième outils rotatifs (3, 4) contre les surfaces avant et arrière de la partie de joint des plaques métalliques ; et

des dispositifs de déplacement (47, 48) pour déplacer les premier et deuxième outils rotatifs (3, 4) fixés aux dispositifs de rotation des outils (7, 8) le long de la partie de joint ; dans lequel :

le premier outil rotatif (3) comprend un corps d'outil (3a) ayant une partie d'épaulement (3c) formée à une partie d'extrémité de pointe de celui-ci et au moins une partie saillante (3d) formée pour faire saillie de la partie d'extrémité de pointe du corps d'outil,

**caractérisé en ce que**

le deuxième outil rotatif (4) comprend un corps d'outil (4a) ayant une partie d'épaulement (4c) formée à une partie d'extrémité de pointe de celui-ci et au moins une partie en creux (4d) formée à la partie d'extrémité de pointe du corps d'outil,

dans lequel la partie en creux (4d) est formée pour recevoir l'extrémité de la partie saillante (3d) lorsque les deux plaques métalliques (1, 2) doivent être soudées, et

un dispositif de commande (83) est configuré pour commander les dispositifs de pressage des outils (45, 46) afin d'insérer l'extrémité de la pointe de la partie saillante (3d) du premier outil rotatif (3) dans la partie en creux (4d) du second outil rotatif (4) et de presser les surfaces d'épaulement (3b), 4b) des parties d'épaulement des premier et deuxième outils rotatifs (3, 4) contre les surfaces avant et arrière de la partie de joint (J) lorsque les dispositifs de pressage des outils (45, 46) déplacent les premier et deuxième outils rotatifs (3, 4) fixés aux dispositifs de rotation des outils (7, 8) dans la direction de leur rapprochement l'un de l'autre, et

le dispositif de commande (83) est configuré pour commander les dispositifs de déplacement (47, 48) afin de déplacer les premier et second outils rotatifs (3, 4) le long de la partie de joint sous l'état où l'extrémité de pointe de la partie saillante (3d) du premier outil rotatif (3) est insérée dans la partie en creux (4d) du second outil rotatif (4) et les surfaces d'épaulement (3b, 4b) des parties d'épaulement des premier et deuxième outils rotatifs (3, 4) sont pressées contre les surfaces avant et arrière de la partie de joint (J) pour ainsi malaxer par friction la partie de joint (J) dans toute la région dans le sens de l'épaisseur de la partie de joint (J).

7. Dispositif de soudage par friction-malaxage de deux côtés selon la revendication 6, comprenant en outre :
des dispositifs de support d'inclinaison (76a, 76b) pour supporter les premier et second outils rotatifs (3, 4) afin d'incliner les axes des premier et second outils rotatifs de telle sorte que les parties d'extrémité des premier et second outils rotatifs avancent dans une direction de mouvement des premier et second outils rotatifs par rapport à la partie de joint (J).

8. Dispositif de soudage par friction-malaxage de deux côtés selon la revendication 6 ou 7, dans lequel les dispositifs de rotation des outils (7, 8) sont configurés pour faire tourner les premier et deuxième outils rotatifs (3, 4) dans des directions opposées sur les faces avant et arrière de la partie de joint (J).

9. Dispositif de soudage par friction-malaxage de deux côtés selon l'une quelconque des revendications 6 à 8, dans lequel le dispositif de commande (83) est configuré pour commander les dispositifs de pressage des outils (45, 46) et les dispositifs de déplacement (47, 48) de telle sorte que :
au moins un (3) des premier et second outils rotatifs (3, 4) fixés aux dispositifs de rotation d'outil (7, 8) est déplacé à une profondeur d'insertion prévue par commande de position dans la direction de l'épaisseur des plaques métalliques (1, 2) avant le début du soudage par friction-malaxage ; puis, l'outil rotatif est déplacé par commande de position dans une direction de progression du soudage à partir d'une surface de bord (24) de la partie de joint des deux plaques métalliques, la profondeur d'insertion de l'outil rotatif (3) étant maintenue pour commencer le soudage par friction-malaxage ; après le début du soudage par friction-malaxage, la commande de position est commutée en commande de charge constante pour contrôler la position d'insertion de l'outil rotatif de telle sorte qu'une charge appliquée à l'outil rotatif (3) soit maintenue à une valeur prédéterminée ; et ensuite, avant que l'outil rotatif n'atteigne une extrémité de fin de soudage de la partie de joint à laquelle le soudage par friction-malaxage se termine, la commande de charge constante est commutée en commande de position pour maintenir la position d'insertion de l'outil rotatif (3) à ce moment, et l'outil rotatif passe à travers l'extrémité de fin de soudage de la partie de joint.

FIG. 1

FIG. 2

FIG. 3

# FIG. 4

# FIG. 5

FIG. 6

FIG. 7

# FIG. 8

# FIG. 9

FIG. 10

Metal Plate
Traveling Direction

## FIG. 11

## FIG. 12

# FIG. 13

# FIG. 14

# FIG. 15

# FIG. 16

## FIG. 17

15

Tool Rotational Direction

3

1

2

Welding Progress Direction

Welding Progress Direction

Tool Rotational Direction

4

15

## FIG. 18

15

Upper Rotational Direction

⊗ Welding Progress Direction

3

Metal Plate Traveling Direction

2

27b Lower Shearing Force

27a Upper Shearing Force

1

4

Lower Rotational Direction

39

**FIG. 19**

**FIG. 20**

# FIG. 21

15

3

21a  Upper Friction Stir Welding
    Starting Position

Welding Direction

J(1,2)

24

21b  Lower Friction Stir Welding
    Starting Position

4

## FIG. 22

21a  Upper Friction Stir Welding
     Starting Position

21b  Lower Friction Stir Welding
     Starting Position

Welding Direction

$\theta 1$

15

3

J(1,2)

24

4

15

$\theta 2$

# FIG. 23

20a Upper Rotating Tool Standby Position

3

13a

20a Upper Rotating Tool Standby Position

21a Upper Friction Stir Welding Starting Position

22a Upper Friction Stir Welding Finishing Position

J(1,2)

24

13b

21b Lower Friction Stir Welding Starting Position

22b Lower Friction Stir Welding Finishing Position

4

20b Lower Rotating Tool Standby Position

One Surface Side: Position Control Range
Another Surface Side: Load Control Range

20b Lower Rotating Tool Standby Position

Both–Surfaces Position Control Range

Both–Surfaces Position Control Range

(Both–Surfaces Load Control Range)

# FIG. 24

Step S1

Calculate Relative Positions Of Upper And Lower Tools And Plates
(Calculation Is Performed Using Values Measured By Position
Measuring Devices, And Calculated Values Are Used For Position Control)

Step S2

Both Surfaces Position Control
(From Upper And Lower Rotating Tools Standby Position To
Friction Stir Starting Plate Edge Surfaces)

Step S3

One Surface Position Control And
Another Surface Load Control
(From Friction Stir Starting Plate Edge Surfaces
To Friction Stir Finishing Position)

Step S4

Both Surfaces Position Control
(From Friction Stir Finishing Position To
Friction Stir Tool Standby Position)

# FIG. 25

Step S1

Calculate Relative Positions Of Upper And Lower Tools And Plates
(Calculation Is Performed Using Values Measured By Position
Measuring Devices, And Calculated Values Are Used For Position Control)

Step S2

Both Surfaces Position Control
(From Upper And Lower Rotating Tools Standby Position To
Friction Stir Starting Plate Edge Surfaces)

Step S3A

Both Surfaces Load Control
(From Friction Stir Starting Plate Edge Surfaces
To Friction Stir Finishing Positions)

Step S4

Both Surfaces Position Control
(From Friction Stir Finishing Position To
Friction Stir Tool Standby Position)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000334577 A
- JP 2712838 A

- EP 1386688 A1